# EUROPÄISCHE PATENTANMELDUNG

(11) **EP 2 386 229 A1**
(43) Veröffentlichungstag der Anmeldung: **16.11.2011**
(21) Anmeldenummer: 10405100.8
(22) Anmeldetag: 10.05.2010
(51) Int. Cl.: A47J 31/44

(54) **Milchkühler, Getränkebereitungsmaschine, Kombination aus einem Milchkühler und einer Getränkebereitungsmaschine und Verfahren zum Beziehen eines Milchvolumes**

(71) Anmelder: Jura Elektroapparate AG, 4626 Niederbuchsiten (CH)
(72) Erfinder: Reyhanloo, Shahryar, 4573 Lohn-Ammannsegg (CH)
(74) Vertreter: EGLI-EUROPEAN PATENT ATTORNEYS

(57) **Zusammenfassung**

Die Erfindung betrifft einen Milchkühler (10) zur gekühlten Bevorratung eines Milchvolumens (16). Der Milchkühler (10) enthält einen Milchbehälterkörper (12) mit einem Milchbehälter (14) zur Aufnahme des Milchvolumens (16), eine Kühleinheit (18) zum Kühlen des Milchvolumens (16), eine Milchlanze (26), welche ein erstes Ende, welches in das Milchvolumen (16) eintauchbar ist, und ein zweites Ende enthält, welches mit einem Milchauslass (32) an der Aussenseite des Milchkühlers (10) in Fluidverbindung steht, und einen Füllzustands-Sensor (34), welcher dazu ausgelegt ist, ein Sensorsignal in Ansprechen auf einen Füllzustand des Milchbehälters (14) zu erzeugen. Ferner sind eine Füllzustands-Messelektronik (36), welche mit dem Füllzustands-Sensor (34) verbunden ist und dazu ausgelegt ist, aus dem Sensorsignal ein Füllzustandsinformationssignal zu erzeugen, welches eine Information über den Füllzustand des Milchbehälters (14) enthält, und ein Sender (38) zum Übertragen des Füllzustandsinformationssignals über eine Luftschnittstelle (40) an eine Getränkebereitungsmaschine enthalten.

## Beschreibung

Die Erfindung bezieht sich auf einen Milchkühler nach Anspruch 1, eine Getränkebereitungsmaschine nach Anspruch 10, eine Kombination aus einem Milchkühler und einer Getränkebereitungsmaschine nach Anspruch 11 und ein Verfahren zum Beziehen eines Milchvolumens nach Anspruch 13.

Es sind Getränkebereitungsmaschinen bekannt, bei welchen Milch und/oder Milchschaum zur Zubereitung von unterschiedlichen Kaffeespezialitäten, wie beispielsweise Latte Macchiato oder Cappuccino, in einer Milchabgabevorrichtung der Getränkebereitungsmaschine erzeugt werden. Hierzu wird ein Milchvolumen über einen Milchschlauch aus einem Milchbehälter in beispielsweise eine Aufschäumvorrichtung der Milchabgabevorrichtung angesaugt. Das Ansaugen wird mithilfe des Venturi-Prinzips realisiert. In die Aufschäumvorrichtung angesaugt, wird dann Milchschaum erzeugt und/oder das Milchvolumen lediglich erwärmt.

Falls zu wenig oder gar keine Milch im Milchbehälter bevorratet ist, jedoch der Ablauf eines Milchvolumenbezugs in einer Steuerung der Getränkebereitungsmaschine fest programmiert ist, werden unzureichende Kaffeespezialitäten abgegeben. Mit anderen Worten, erhält der Benutzer ein herkömmlich zubereitetes Kaffeegetränk ohne oder mit zu wenig Milch und/oder Milchschaum. Dies ist für den Benutzer unbefriedigend, da der gesamte Vorgang zum Zubereiten einer gewünschten Kaffeespezialität nochmals wiederholt werden muss. Erst mit einem ausreichend gefüllten Milchbehälter kann er dann die perfekt zubereitete Kaffeespezialität erhalten.

Die zuvor abgegebene unvollständige Kaffeespezialität wird oftmals weggeschüttet. Hierdurch werden Ressourcen, beispielsweise Kaffeebohnen, das (unzureichende) Milchvolumen, Wasser und Energie, verschwendet. Zudem wird dem Benutzer zugemutet, unnötig viel Zeit zur letztendlichen Zubereitung der Kaffeespezialität zu verbringen.

Ein besonders grosser Nachteil ist darin zu sehen, wenn der Benutzer für den Bezug der gewünschten Kaffeespezialität zuvor einen festgelegten Geldbetrag gezahlt hat, er dann jedoch eine unzureichende Kaffeespezialität zubereitet bekommt. Insbesondere in Bürogebäuden oder im Gastrobereich sind sogenannte Münz-Kaffeemaschinen aufgestellt, welche die Kaffeespezialität erst nach Einzahlung eines festgelegten Geldbetrages abgeben. Diese Einzahlung kann durch Einwerfen von Münzen in einen Münzschlitz der Maschine oder durch Abbuchung eines festgelegten Geldbetrages von einem virtuellen Geldkonto, welches über ein Magnetkartensystem geführt wird, realisiert werden. Eine unzureichend abgegebene Kaffeespezialität, für die jedoch zuvor ausreichend bezahlt wurde, führt zu einer Unzufriedenheit der Benutzer und zu aufwendigen und zeitraubenden Reklamationsabläufen. Möglicherweise werden diese Münz-Kaffeemaschinen daraufhin gemieden. Eine unzureichend gefertigte Kaffeespezialität hat somit auch negative finanzielle Auswirkungen.

Ein unzureichend aufgefüllter Milchbehälter hat im Verlaufe der Zubereitung von der Kaffeespezialität eine Unterbrechung der Milchzufuhr zur Folge. Hierdurch ist der Bezug eines homogenen Milchaustrittsstrahls aus einer Düse der Milchabgabevorrichtung unterbrochen. Diese Unterbrechung hat eine unkontrollierte Milch-/Dampfausgabe aus der Düse zur Folge, wodurch Milch, Wasser und Dampf unvorhersehbar in alle Richtungen spritzen. Hierdurch können Kleidungsstücke des Benutzers verunreinigt werden. Zudem kann der Benutzer mit der heissen Milch-/Dampfausgabe direkt in Kontakt kommen und sich hierbei Verbrennungen oder Verbrühungen zuziehen. Ein weiterer Nachteil besteht darin, dass die Frontseite der Getränkebereitungsmaschine durch Milch-, Wasser- und Dampfspritzer verunreinigt werden kann.

Zur Lösung des Problems kann der Benutzer im Vorfeld der Zubereitung seiner gewünschten Kaffeespezialität den Füllstand der Milch im Milchbehälter kontrollieren. Üblicherweise sind die Milchbehälter jedoch nicht transparent, sodass der Benutzer den Füllzustand der Milch im Milchbehälter lediglich unter Aufbringung eines hohen Aufwandes kontrollieren kann. Bei den Münz-Kaffeemaschinen in Bürogebäuden oder im Gastrobereich sind oftmals überhaupt keine Vorkehrungen getroffen, welche es dem Benutzer erlauben den Füllzustand des Milchbehälters im Vorfeld der Zubereitung seiner gewünschten Kaffeespezialität zu kontrollieren.

Die bereitgestellte Milch sollte möglichst gekühlt bevorratet werden. Hierzu wird vielfach ein Thermobehälter, beispielsweise eine doppelwandige Konstruktion mit einem Vakuum-Zwischenraum, oder ein Kühlschrank mit einem geringen Aufnahmevolumen verwendet, welcher beispielsweise ein Peltier-Element enthält. Bei diesen Milchbehältern ist jedoch überhaupt keine Kontrolle des Füllzustandes möglich, ohne dass hierzu jedes Mal der Milchbehälter geöffnet werden muss. Dies ist, falls überhaupt möglich, einerseits unpraktisch und wird zudem meistens vergessen.

Der vorliegenden Erfindung liegt die Aufgabe zugrunde, die genannten Nachteile zu vermeiden und einen Milchkühler, eine Getränkebereitungsmaschine, eine Kombination aus einem Milchkühler und einer Getränkebereitungsmaschine und ein Verfahren zum Beziehen eines Milchvolumens bereitzustellen, sodass eine Zubereitung von einer Kaffeespezialität mit einer hierzu ausreichenden Milchabgabe möglich ist.

Diese Aufgabe wird durch einen Milchkühler mit den Merkmalen des Patentanspruchs 1 gelöst.

Diese Aufgabe wird insbesondere dadurch gelöst, indem der Füllzustand eines Milchbehälters des Milchkühlers automatisch überwacht wird und hierzu Signale, welche eine Information über den Füllzustand enthalten, von einem Sender seitens des Milchkühlers zu einem Sender/Empfänger seitens der Getränkebereitungsmaschine übertragen werden. Der Füllzustand des Milchbehälters wird somit kontinuierlich überwacht. Sinkt der Füllstand des Milchvolumens im Milchbehälter unterhalb eines notwendigen Milchvolumens ab, welches zur Zubereitung einer jeweils ausgewählten Kaffeespezialität notwendig ist, wird das Milchprodukt nicht gestartet. Ändert sich das Signal im Verlaufe des Milchbezuges ("zu wenig Milch"), kann die Milchförderung sofort gestoppt oder unterbrochen werden. Alternativ kann ein genügend dimensioniertes Nachlaufvolumen sichergestellt werden, welches dazu ausreicht, dass der Bezug und somit die Zubereitung der Kaffeespezialität sicher zu Ende geführt werden können. Nachdem Milch nachgefüllt wurde, können dann anschliessende Bezüge vorgenommen werden. Bei einem unzureichenden Füllstand des Milchvolumens im Milchkühler können weiterhin Kaffeeprodukte bezogen werden, welchen keine Milch hinzugefügt werden müssen, z.B. schwarzer Kaffee oder Espresso.

Der Milchkühler enthält einen Deckel zum Verschliessen des Milchbehälters, wobei der Deckel mit dem zweiten Ende von der Milchlanze derart verbunden ist, dass die Milchlanze im verschlossenen Zustand des Deckels im Wesentlichen vollständig in den Milchbehälter hineinragt. Somit wird die Milchlanze einfach aus dem Milchvolumen entnommen, sobald der Deckel von dem Milchbehälter abgehoben wird. Ein Vorteil von der an der Unterseite des Deckels angebrachten Milchlanze besteht darin, dass diese schnell und einfach unter beispielsweise fliessend Wasser gereinigt und gespült werden kann. Zum Verschliessen und Öffnen des Deckels kann ein jeglicher Verschlussmechanismus genutzt werden, wie beispielsweise ein Drehverschluss oder Schnappverschluss.

Der Milchauslass ist an der Aussenoberfläche des Deckels angebracht. Hierdurch wird, von dem Milchbehälter ausgehend, ein Fluiddurchgang über die Milchlanze an den Milchauslass gebildet. Der Milchauslass ist mit einem Ende eines Milchschlauches koppelbar, dessen weiteres Ende mit einer Milchabgabevorrichtung der Getränkebereitungsmaschine koppelbar ist. Die Position des Milchauslasses an der Aussenoberfläche des Deckels sollte für den Benutzer gut zugänglich sein, sodass dieser den Milchschlauch schnell und einfach an- und abkoppeln kann. Der Milchauslass kann hierzu beispielsweise an einem Umfangsbereich des Deckels angebracht sein.

Beispielsweise kann der Füllzustands-Sensor an einem Umfangsbereich der Milchlanze angebracht sein. Hierdurch wird es ermöglicht, dass der Füllzustands-Sensor, im aufgesetzten und verschlossenen Zustand des Deckels auf dem Milchbehälter, dauerhaft mit dem Milchvolumen in Kontakt steht und somit den Füllzustand des Milchbehälters zuverlässig erfassen kann. Im Zuge der Reinigung und Spülung können zugleich die Milchlanze als auch der Füllzustands-Sensor gereinigt werden.

Beispielsweise kann der gesamte Fluiddurchgang - beginnend vom Ansaugen der Milch bis zum Austritt der Milch am Milchauslass - als eine vom Deckelkörper separierbare Einheit ausgebildet sein. Diese Einheit kann schnell und einfach vom Deckelkörper getrennt werden und einer separaten, ausreichenden Reinigung und Spülung unterzogen werden. Somit kann insbesondere der ansonsten schwer zugängliche Fluiddurchgang sehr zuverlässig gespült und gereinigt werden.

Vorzugsweise sind die Füllzustands-Messelektronik und/oder der Sender in dem Deckel enthalten. Hierdurch kann der Füllzustands-Sensor dauerhaft unterbrechungsfrei mit der Füllzustands-Messelektronik, welche im Deckel untergebracht ist, elektrisch verbunden werden. Die hierzu notwendige elektrische Verbindung (z.B. eine oder mehrere Leitungen) hat eine nur geringe Länge und verläuft im Wesentlichen entlang der Milchlanze. Diese Verbindung kann an einem Umfangsbereich der Milchlanze angebracht sein. Alternativ kann sie innerhalb von einer Vertiefung, welche in Längsrichtung der Milchlanze eingebracht ist, einbettet sein. Alternativ kann sie gänzlich im Material der Milchlanze eingebettet sein. In einem Fall, bei welchem die elektrische Verbindung nicht im Material der Milchlanze eingebettet ist, sollte diese elektrische Verbindung isoliert sein, um Messwertfehler zu vermeiden. Die Füllzustands-Messelektronik und/oder der Sender können in einer Ausnehmung innerhalb des Deckels untergebracht sein, welche, beispielsweise durch eine Klappe verschlossen, frei zugänglich ist. Alternativ können die Füllzustands-Messelektronik und/oder der Sender im Material des Deckels vergossen sein. Bei beiden Beispielen ist es wichtig, dass diese elektronischen Bauelemente gegen Feuchtigkeit, beispielsweise durch Milch oder Wasser, geschützt sind. Insbesondere beim Reinigen des Deckels mit fliessend Wasser kann schnell Feuchtigkeit eindringen.

Im Falle der zuvor erwähnten Anbringung der Milchlanze an der separierbaren Einheit muss jedoch eine elektrische Schnittstelle zwischen der separierbaren Einheit und dem Hauptkörper des Deckels bereitgestellt werden um eine elektrische Verbindung zwischen dem Füllzustands-Sensor und der Füllzustands-Messelektronik herstellen zu können.

Vorzugsweise ist der Füllzustands-Sensor an einer Sensorlanze angebracht, welche derart an der Unterseite des Deckels befestigt ist, dass sie im verschlossenen Zustand des Deckels im Wesentlichen vollständig in den Milchbehälter hineinragt. Der Füllzustands-Sensor kann am distalen Ende der Sensorlanze angebracht sein und ist dauerhaft elektrisch mit der im Deckel enthaltenen Füllzustands-Messelektronik verbunden. Hierdurch kann die Anbringung der zuvor erwähnten elektrischen Schnittstelle zwischen der separierbaren Einheit und dem Hauptkörper des Deckels vermieden werden. Die besonders einfache und direkte elektrische Verbindung, welche ohne Schnittstelle auskommt, ist durch die besonders vorteilhafte Eingliederung der elektronischen Bauelemente (Füllzustands-Messelektronik und Sender) im Deckel und die Anbringung des Füllzustands-Sensors an der Sensorlanze ermöglicht. Hierdurch sind mögliche Fehlerquellen, beispielsweise hervorgerufen durch eine Verunreinigung von einer Schnittstelle durch Milchrückstände, usw., ausgeschlossen.

Vorzugsweise sind die Füllzustands-Messelektronik und/oder der Sender über zumindest einen Energiespeicher, insbesondere eine Batterie oder ein Akkumulator, mit elektrischer Energie versorgbar.

Beispielsweise ist der Energiespeicher in dem Deckel enthalten und elektrisch mit der Füllzustands-Messelektronik und/oder dem Sender verbunden. Somit erhalten diese elektronischen Bauelemente direkt ihre eigene Niederspannungs-Stromversorgung. Ein Vorteil der Anordnung der elektronischen Bauelemente zugleich mit ihrer Niederspannungs-Stromversorgung im Deckel des Milchkühlers besteht darin, dass keinerlei Schnittstellen bzw. Steckerelemente bereitgestellt werden müssen.

Vorzugsweise sind die Füllzustands-Messelektronik und/oder der Sender über eine am Milchbehälterkörper koppelbare externe elektrische Energiequelle mit elektrischer Energie versorgbar. Hierbei besteht ein Vorteil darin, dass der zuvor genannte Energiespeicher, beispielsweise eine Batterie oder ein Akkumulator, im Deckel eingespart werden kann, wodurch das Gewicht von dem Deckel wesentlich reduziert wird. Ein hohes Gewicht des Deckels kann für den Benutzer beim Einfüllen oder Nachfüllen eines Milchvolumens störend sein. Zudem wird hierdurch ein Austausch von verbrauchten Batterien oder ein Nachladen des Akkumulators vermieden. Insgesamt ermöglicht dieses Beispiel eine Reduktion von dem Gewicht des Deckels sowie eine Zeit- und Kosteneinsparung. Zudem ist die im Milchbehälterkörper umfasste Kühleinheit zum Kühlen des Milchvolumens üblicherweise ohnehin über eine externe elektrische Energiequelle mit elektrischer Energie versorgt. Die externe elektrische Energiequelle ist beispielsweise als eine über eine Steckdose zugeführte Netzspannung ausgeführt. Diese Netzspannung (beispielsweise eine 230 Volt/50 Hertz Wechselspannung) kann direkt über ein am Milchbehälterkörper koppelbares Netzkabel zugeführt werden. Diese Netzspannung kann dann durch ein ebenfalls im Milchbehälterkörper enthaltenes Schaltnetzteil auf eine den elektronischen Bauelementen angepasste Gleichstrom-Niederspannungsversorgung umgewandelt werden. Alternativ kann die externe elektrische Energiequelle als eine bereits extern umgewandelte Gleichstrom-Niederspannungsversorgung ausgeführt sein, welche beispielsweise durch ein Steckernetzteil bereit gestellt wird.

Vorzugsweise ist die externe elektrische Energiequelle über eine Energieversorgungs-Schnittstelle zwischen dem Milchbehälterkörper und dem Deckel elektrisch mit der Füllzustands-Messelektronik und/oder dem Sender koppelbar. Somit sind diese elektronischen Bauelemente, im verschlossenen Zustand des Deckels auf den Milchbehälterkörper, auch ohne einen im Deckel umfassten Energiespeicher mit elektrischer Energie versorgt. Hierdurch wird das Gewicht des Deckels reduziert.

Vorzugsweise enthält die Energieversorgungs-Schnittstelle wenigstens zwei Schnittstellenelemente, welche jeweils am Milchbehälterkörper und Deckel derart ausgerichtet und angeordnet sind, dass sie im verschlossenen Zustand des Deckels auf den Milchbehälterkörper miteinander elektrisch verbunden sind. Diese besonders einfache Ausgestaltung der Energieversorgungs-Schnittstelle ermöglicht eine Versorgung der im Deckel umfassten elektronischen Bauelemente mit elektrischer Energie, welche von einer am Milchbehälterkörper koppelbaren externen elektrischen Energiequelle (beispielsweise die Netzspannung aus der Steckdose) zugeführt ist. Der Deckel kann jedoch weiterhin vom Milchbehälterkörper bzw. Milchkühler entnommen werden (beispielsweise zum Auffüllen oder Nachfüllen eines Milchvolumens oder zum Reinigen und Spülen des Deckels). In diesem Fall sind die im Deckel umfassten elektronischen Bauelemente selbstverständlich elektrisch von der externen elektrischen Energiequelle getrennt. Nur im Betriebszustand, das heisst im aufgesetzten und verschlossenen Zustand des Deckels auf dem Milchbehälterkörper, sind die elektronischen Bauelemente zuverlässig mit der externen elektrischen Energiequelle elektrisch verbunden.

Vorzugsweise sind die Füllzustands-Messelektronik und/oder der Sender im Milchbehälterkörper enthalten. In dieser alternativen Ausführungsform sind die elektronischen Bauelemente nunmehr nicht im Deckel umfasst. Ein Vorteil besteht darin, dass dieser somit unabhängig von der Vorgabe einer Unterbringung der elektronischen Bauelemente (beispielsweise innerhalb einer darin eingebrachten Aussparung, welche durch eine Klappe verschlossen wird, oder durch vollständiges Einschmelzen) entworfen werden kann. Ferner ermöglicht die Unterbringung der elektronischen Bauelemente innerhalb des Milchbehälterkörpers einen besseren Zugriff auf die elektronischen Bauelemente. Somit ist eine einfache und schnelle Wartung im Falle des Auftretens eines Fehlers möglich.

Vorzugsweise sind die Füllzustands-Messelektronik und/oder der Sender dauerhaft über eine am Milchbehälterkörper koppelbare externe elektrische Energiequelle mit elektrischer Energie versorgbar. Somit können diese elektronischen Bauelemente ohne die in der vorherigen Ausführungsform beschriebene Energieversorgungs-Schnittstelle mit elektrischer Energie versorgt werden. Durch den Wegfall dieser Energieversorgungs-Schnittstelle sind mögliche Fehlerursachen (beispielsweise hervorgerufen durch verunreinigende Milchrückstände) im Vorfeld ausgeschlossen. Somit ist eine einfache und fehlerunanfällige Energieversorgung dieser elektronischen Bauelemente gewährleistet.

Beispielsweise ist der Füllzustands-Sensor über eine Sensor-Schnittstelle zwischen dem Milchbehälterkörper und dem Deckel elektrisch mit der Füllzustands-Messelektronik koppelbar. Somit kann der Füllzustands-Sensor schnell und einfach mit der im Milchbehälterkörper angeordneten Füllzustands-Messelektronik verbunden werden, indem der Deckel auf den Milchbehälterkörper aufgesetzt wird.

Beispielsweise enthält die Sensor-Schnittstelle wenigstens zwei Schnittstellenelemente, welche jeweils am Milchbehälterkörper und Deckel derart ausgerichtet und angeordnet sind, dass sie im verschlossenen Zustand des Deckels auf dem Milchbehälterkörper miteinander elektrisch verbunden sind. Gegenüber der ersten Ausführungsform, bei welcher die elektronischen Bauelemente im Deckel umfasst sind, ist bei dieser zweiten Ausführungsform die Energieversorgungs-Schnittstelle durch die Sensor-Schnittstelle ausgetauscht. Diese Schnittstelle überführt hierbei jedoch keine elektrische Energie zur Stromversorgung der elektronischen Bauelemente. Vielmehr werden hier Sensorsignale mit geringer Spannungsamplitude überführt. Ein über die Schnittstelle möglicherweise eingeführtes und überlagertes Rauschen auf die Sensorsignale des Füllzustands-Sensors hat hierbei eine geringere Beeinflussung auf das Messergebnis als ein möglicherweise auf die Energieversorgung überlagertes Rauschen. Im Umkehrschluss kann die Sensor-Schnittstelle einfacher und kostengünstiger ausgeführt werden als die Energieversorgungs-Schnittstelle.

Beispielsweise ist der Füllzustands-Sensor ein passives Messelement zum Messen eines elektrischen Widerstandes. Somit wird der Füllstand des Milchvolumens im Milchbehälter durch eine technisch zuverlässige und bewährte Messmethode detektiert. Die Füllzustands-Messelektronik erfasst hierbei den Messwert einer Widerstandsänderung und wertet diesen aus. Somit kann der Füllstand des Milchvolumens kontinuierlich überwacht werden. Eine Änderung des erfassten elektrischen Widerstandes kann durch die Füllzustands-Messelektronik als ein Absinken des Milchvolumens innerhalb des Milchbehälters unterhalb eines vorbestimmten Schwellwertes detektiert werden. Der Füllzustands-Sensor kann alternativ als ein kapazitiver Füllstands-Sensor ausgebildet sein. Es sind weitere passive, aktive oder optische Sensoren als Füllzustands-Sensoren einsetzbar, welche dazu geeignet sind, einen Füllstand eines Fluides innerhalb eines Behälters zu erfassen. Es sind ferner Sensoren als Füllzustands-Sensor einsetzbar, welche ein Absinken eines Füllstandes unterhalb eines vorbestimmten Schwellwertes (beispielsweise eine notwendige Milchabgabe) erfassen.

Beispielsweise enthält der Füllzustands-Sensor zumindest zwei elektrisch leitfähige Sensorelemente, welche voneinander elektrisch getrennt sind und separat elektrisch mit der Füllzustands-Messelektronik verbunden sind. Ein beispielhafter Füllzustands-Sensor zum Erfassen des Milchvolumens kann zwei elektrisch leitfähige Sensorelemente enthalten, welche über das Milchvolumen elektrisch miteinander verbunden sind. Hierbei dient das Milchvolumen als elektrischer Leiter einer bestimmten elektrischen Widerstandsgrösse, bzw. eines bestimmten elektrischen Leitwertes. Ein Absinken des Milchvolumens unterhalb eines bestimmten Schwellwertes (welchem ein Absinken des Milchniveaus einhergeht) hat zur Folge, dass zumindest eines der leitfähigen Sensorelemente keinen Kontakt mit dem Milchvolumen hat. Somit ist auch der elektrische Kontakt zwischen den beiden Sensorelementen über das Milchvolumen abgebrochen. In diesem Fall steigt die elektrische Widerstandsgrösse zwischen diesen beiden Sensorelementen auf Unendlich an. Dieser Anstieg der elektrischen Widerstandsgrösse wird wiederum durch die Füllzustands-Messelektronik detektiert.

Beispielsweise sind die Sensorelemente an Oberflächenbereichen von der Milchlanze oder Sensorlanze angebracht. Hierdurch stehen die Sensorelemente bei ausreichender Befüllung des Milchbehälters dauerhaft und zuverlässig mit dem Milchvolumen in Flächenkontakt. Der elektrische Widerstand zwischen diesen beiden Sensorelementen lässt sich somit unter anderem anhand der elektrischen Leitfähigkeit der Milch bestimmen. Die elektrische Leitfähigkeit ist ein Mass für den Widerstand eines Mediums gegenüber elektrischem Strom. Sie ist reziprok zum Widerstand (Impedanz) und wird in Siemens (1 S = 1 A/1 V) gemessen. Die spezifische Leitfähigkeit der Milch (mS/cm) ergibt sich aus dem Vorhandensein von Elektrolyten. Die Leitfähigkeit der Milch schwankt in Abhängigkeit unter anderem vom Fettgehalt der Milch und von der Milchtemperatur. Die elektrische Leitfähigkeit der Milch schwankt ungefähr zwischen 4,5 und 5,9 mS/cm bei einer Temperatur von 20°C.

Beispielsweise sind die Sensorelemente jeweils an derartigen Positionen an den Oberflächenbereichen von der Milchlanze oder Sensorlanze angebracht, dass, im verschlossenen Zustand des Deckels, zwischen zumindest zwei Sensorelementen ein elektrischer Kontakt über das im Milchbehälter eingefüllte Milchvolumen hergestellt ist, wenn das im Milchbehälter enthaltene Milchvolumen grösser als ein notwendiges Milchvolumen zur Zubereitung einer gewünschten Kaffeespezialität ist, und der elektrische Kontakt unterbrochen ist, wenn das im Milchbehälter enthaltene Milchvolumen geringer als das notwendige Milchvolumen ist. Bei einer beispielhaften Anordnung können mehr als zwei Sensorelemente an der Aussenfläche der Milchlanze oder Sensorlanze angeordnet werden, welche zueinander in Längsrichtung der jeweiligen Lanze ausgerichtet sind. Im verschlossenen Zustand des Deckels auf dem Milchbehälter sind diese Sensorelemente somit übereinander angeordnet. Ferner können diese Sensorelemente über separate Zuleitungen mit jeweiligen Eingängen der Füllzustands-Messelektronik verbunden sein. Die Füllzustands-Messelektronik ist hierbei derart ausgebildet, dass sie jeweils den elektrischen Widerstand zwischen dem untersten Sensorelement (beispielsweise am distalen Ende der Milchlanze oder Sensorlanze angebracht) und den jeweiligen weiteren

Sensorelementen misst.

Bei einem vollständig gefüllten Milchbehälter stehen somit alle Sensorelemente mit dem Milchvolumen in Kontakt, sodass zwischen dem untersten Sensorelement und den jeweiligen weiteren Sensorelementen ein elektrischer Widerstand messbar ist. Ein abnehmendes Milchvolumen und eine damit einhergehende Absenkung des Milchniveaus haben zur Folge, dass das Milchniveau unterhalb beispielsweise des obersten Sensorelements absinkt. Somit steigt der elektrische Widerstand zwischen dem untersten Sensorelement und diesem obersten Sensorelement auf nahezu Unendlich (R -> ∞) an. Diese Änderung im elektrischen Widerstand wird durch die Füllzustands-Messelektronik erfasst und als geänderte Füllzustandsinformation ausgewertet und ausgegeben. Ein weiter abnehmendes Milchvolumen und eine damit einhergehende Absenkung des Milchniveaus unterhalb des zweitobersten Sensorelements werden ebenfalls durch die Füllzustands-Messelektronik erfasst und als geänderte Füllzustandsinformation ausgewertet und ausgegeben. Dieser Ablauf setzt sich in diskreten Schritten fort. Hierdurch kann der Füllstand des Milchvolumens im Milchbehälter zuverlässig erfasst und ausgegeben werden. Mit steigender Anzahl der übereinander angeordneten Sensorelemente steigt auch die Genauigkeit der Aussage über den Füllstand des Milchvolumens im Milchbehälter an.

Beispielsweise enthält der Milchkühler ein Anzeigenelement, welches an einer Aussenfläche vom Milchkühler angebracht ist und elektrisch mit der Füllzustands-Messelektronik verbunden ist, zur optischen Anzeige einer Information über den Füllzustand des Milchbehälters. Hierdurch kann der Füllstand des Milchvolumens mithilfe des Anzeigenelements (welches beispielsweise auf der Oberseite des Deckels angebracht ist) angezeigt werden. Das Anzeigenelement kann ein leuchtendes Piktogramm oder eine LED sein. Die optische Anzeige kann eine Information sein, welche einen Hinweis über das enthaltene Milchvolumen angibt (beispielsweise 1000 Milliliter, 500 Milliliter, 250 Milliliter, usw.). In einer einfachen Ausführung kann die optische Anzeige lediglich einen Hinweis darüber angeben, dass das enthaltene Milchvolumen unterhalb eines vorbestimmten Schwellwert-Volumens (notwendiges Milchvolumen) abgesunken ist. In diesem Fall kann beispielsweise eine einzelne LED aufleuchten.

Beispielsweise enthält der Milchkühler ferner einen Temperatursensor, welcher dazu ausgelegt ist, ein Temperatursignal in Ansprechen auf eine erfasste Temperatur des Milchvolumens im Milchbehälter zu erzeugen. Hierdurch kann zusätzlich die Milchtemperatur überwacht werden. Falls die Milchtemperatur länger als eine vorbestimmte Zeitperiode einen vorbestimmten Temperatur-Schwellwert dauerhaft überstiegen hat, kann dem Benutzer diese Information mitgeteilt werden. Hierdurch kann der Bezug von eventuell verdorbener Milch vermieden werden.

Beispielsweise ist der Temperatursensor elektrisch mit dem Sender verbunden, welcher ferner dazu ausgelegt ist, das Temperatursignal über die Luftschnittstelle an die Getränkebereitungsmaschine zu übertragen. Hierbei kann dem Benutzer die Information über die Milchtemperatur mittels einer Anzeige an der Getränkebereitungsmaschine mitgeteilt werden. Alternativ oder zusätzlich kann diese Information an einer Anzeige angezeigt werden, welche an einer Aussenfläche des Milchkühlers, beispielsweise auf der Oberseite des Deckels, angebracht ist. Beispielsweise kann die Information über die Temperatur des Milchvolumens im Milchbehälter zur Berechnung des Füllstandes des Milchvolumens herangezogen werden. Hierbei kann die Information über die Temperatur in die Berechnung des Füllstandes einfliessen, falls diese Berechnung in Abhängigkeit von der Temperatur des Milchvolumens steht. Beispielsweise können Einrichtungen an der Getränkebereitungsmaschine bereitgestellt sein, welche einen Bezug eines Milchvolumens verhindern, wenn die Information darüber anliegt, dass das Milchvolumen länger als eine vorbestimmte maximale Zeitdauer einer Temperatur oberhalb einer vorbestimmten maximalen Temperatur ausgesetzt war. Somit kann der Getränkebezug von hygienisch nicht einwandfreier, verdorbener Milch im Vorfeld unterbunden werden.

Beispielsweise ist der Temperatursensor an einem Umfangsbereich der Milchlanze oder Sensorlanze angebracht. Somit kann der Temperatursensor auch schnelle und/oder hohe Temperaturschwankungen des Milchvolumens zuverlässig erfassen.

Die zuvor genannte Aufgabe wird ebenfalls durch eine Getränkebereitungsmaschine mit den Merkmalen des Patentanspruchs 10 gelöst.

Ein wesentlicher Vorteil dieser Getränkebereitungsmaschine besteht darin, dass die Entscheidungslogik auf Basis von zumindest den Eingaben von dem Sender/Empfänger (Information über den Füllstand des Milchvolumens im Milchbehälter), der Benutzerschnittstelle (Information über die jeweils manuell ausgewählte Kaffeespezialität) und der Datenbank (Information über ein notwendiges Milchvolumen zur Zubereitung der jeweils ausgewählten Kaffeespezialität) entscheidet, ob das im Milchbehälter enthaltene Milchvolumen zur Zubereitung der ausgewählten Kaffeespezialität ausreicht. Falls das Milchvolumen ausreicht, wird diese Kaffeespezialität zubereitet. Falls das Milchvolumen nicht ausreicht, wird die Kaffeespezialität nicht zubereitet. In diesem Fall kann lediglich ein schwarzer Kaffee oder Espresso ausgegeben werden. Somit werden immer einwandfreie Kaffeespezialitäten mit ausreichend Milch zubereitet.

Beispielsweise enthält die Getränkebereitungsmaschine ein elektrisch ansteuerbares Fluidventil, welches elektrisch mit dem Ausgang der Entscheidungslogik verbunden ist, wobei das Fluidventil dazu ausgelegt ist, bei der Ausgabe des Freigabe-Signals zur Freigabe der Milchabgabe einen Fluiddurchgang zum Durchleiten eines Dampfbezuges durch die Milchabgabevorrichtung zu öffnen. Hierdurch wird die Milchabgabe auf Basis der Entscheidung durch die Entscheidungslogik mit einem besonders einfachen und kostengünstigen Aufbau ermöglicht. Ein Fluidventil zum Öffnen oder Schliessen einer Leitung zum Durchleiten eines Dampfbezuges durch die Milchabgabevorrichtung ist in vielen Getränkebereitungsmaschinen bereits enthalten. Herkömmlicherweise wird dieses Fluidventil durch manuelle Betätigung einer Taste oder eines Schalters elektrisch ein- oder ausgeschaltet. Es sind auch rein mechanisch bedienbare Fluidventile bekannt.

Beispielsweise enthält die Milchabgabevorrichtung eine Kammer zum Erzeugen eines Unterdrucks, in welcher bei Durchleitung des Dampfbezugs ein Unterdruck erzeugbar ist, wobei die Kammer mit dem Milcheinlass in Fluidverbindung steht. Diese Anordnung ermöglicht das Ansaugen einer bestimmten Menge von Milch aus dem Milchbehälter über den Milchschlauch in die Kammer. Diese Ansaugung geschieht auf Basis des Venturi-Prinzips in der Kammer (Unterdruckkammer), in welcher bei Durchleitung des Dampfbezugs ein Unterdruck erzeugbar ist.

Beispielsweise ist der Sender/Empfänger ferner dazu ausgelegt, ein Temperatursignal zu empfangen, welches eine Information über eine Temperatur des Milchvolumens im Milchbehälter des Milchkühlers enthält. Das zwischen dem Sender des Milchkühlers und dem Sender/Empfänger der Getränkebereitungsmaschine über die Luftschnittstelle übertragene Funksignal kann auf einer ISM-Band-(Industrial, Scientific and Medical Band)-Trägerfrequenz von 2,4 GHz oder einer anderen Träger-Hochfrequenz übertragen werden. Auf der ISM-Band-Trägerfrequenz kann weltweit zulassungsfrei und lizenzfrei übertragen werden. Der Sender/Empfänger kann in einer Steuerung der Getränkebereitungsmaschine integriert sein. Besonders vorteilhaft kann der Sender/Empfänger an einer geeigneten Schnittstelle der Getränkebereitungsmaschine entnehmbar eingesteckt sein. Die Kommunikation zwischen dem Sender/Empfänger und der Steuerung geschieht hierbei leitungsgebunden. Beispielsweise kann die zuvor beschriebene Entscheidungslogik in der Steuerung enthalten sein. Vor einem Milchbezug kann die Steuerung über die Funkstrecke zwischen dem Sender und dem Sender/Empfänger den jeweiligen Füllstand des Milchvolumens abfragen. Wenn das im Milchbehälter bevorratete Milchvolumen geringer als ein vorbestimmtes minimales Milchvolumen ist, wird die Zubereitung der Kaffeespezialität nicht gestartet. Der Sender/Empfänger ist zum Senden und/oder Empfangen eines Informationssignals ausgelegt. Der Sender/Empfänger kann somit lediglich eine Empfangseinrichtung enthalten.

Beispielsweise enthält die Getränkebereitungsmaschine ferner eine Anzeigevorrichtung, welche an einer Aussenfläche davon angebracht ist und elektrisch mit dem Sender/Empfänger verbunden ist, zur optischen Anzeige einer Information über den Füllzustand des Milchbehälters und/oder über die Temperatur des Milchvolumens im Milchbehälter. Somit kann dem Benutzer vorteilhafterweise direkt schon an der Getränkebereitungsmaschine eine Information hinsichtlich des Füllzustandes des Milchbehälters und möglicherweise zusätzlich hinsichtlich der Temperatur des Milchvolumens angezeigt bzw. mitgeteilt werden.

Die zuvor beschriebene Aufgabe wird ebenfalls durch eine Kombination aus einem Milchkühler nach einem der Ansprüche 1 bis 9 und einer Getränkebereitungsmaschine nach Anspruch 10 gelöst. Ein wesentlicher Vorteil dieser Kombination besteht darin, dass innerhalb der Getränkebereitungsmaschine auf Basis von der von dem Milchkühler gesendeten Information entschieden wird, ob das im Milchbehälter des Milchkühlers enthaltene Milchvolumen zur Zubereitung von der ausgewählten Kaffeespezialität ausreicht oder nicht. Falls das Milchvolumen ausreicht, wird diese Kaffeespezialität zubereitet. Falls das Milchvolumen nicht ausreicht, wird diese Kaffeespezialität nicht zubereitet. Somit werden immer einwandfreie Kaffeespezialitäten zubereitet.

Beispielsweise enthält die Kombination eine Luftschnittstelle zwischen einem Sender des Milchkühlers und dem Sender/Empfänger der Getränkebereitungsmaschine. Durch die Funkübertragung kann eine leitungsgebundene Verbindung zwischen dem Milchkühler und der Getränkebereitungsmaschine vermieden werden. Ein besonderer Vorteil besteht darin, dass somit auf die Verwendung eines Kabels verzichtet werden kann, welches bei einem wiederholten Öffnen und Schliessen von dem Deckel des Milchkühlers stören würde. Das Öffnen und Schliessen des Deckels ist zum Einfüllen oder Nachfüllen von einem Milchvolumen in den Milchbehälter immer wieder notwendig. Ein weiterer Vorteil der Funkübertragung besteht darin, dass die Getränkebereitungsmaschine und der Milchkühler in Relation zueinander flexibler positioniert werden können. Zudem können problemlos weitere optionale Einrichtungen eingebunden werden, welche mit der Getränkebereitungsmaschine bidirektional Daten austauschen oder unidirektional Daten an die Getränkebereitungsmaschine senden.

Beispielsweise enthält die Kombination einen Milchschlauch, welcher zwischen einem Milchauslass an der Aussenseite des Milchkühlers und einem Milcheinlass an einer Milchabgabevorrichtung der Getränkebereitungsmaschine gekoppelt ist. Hierdurch wird zuverlässig ein zur Zubereitung von einer Kaffeespezialität notwendiges Milchvolumen über den Milchschlauch in die Milchabgabevorrichtung angesaugt. Der Milchschlauch sollte sowohl am Milcheinlass als auch am Milchauslass leicht entnehmbar gekoppelt sein. Hierdurch kann der Milchschlauch leicht entnommen werden und einer schnellen aber dennoch gründlichen Reinigung unterzogen werden. Ein weiterer Vorteil der Verwendung des Milchschlauchs besteht darin, dass dieser besonders flexibel ist, sodass die Getränkebereitungsmaschine und der Milchkühler in Relation zueinander einfach und flexibel positionierbar sind.

Vorzugsweise enthält die Kombination ferner zumindest ein Beistellgerät mit einer Funkeinrichtung zum Übertragen von einem Beistellgerät-Informationssignal an die Getränkebereitungsmaschine und/oder Empfangen von einem Getränkebereitungsmaschine-Informationssignal von der Getränkebereitungsmaschine über jeweils eine Luftschnittstelle. Die Funkeinrichtung kann beispielsweise als eine Sender/Empfänger-Einrichtung ausgeführt sein und kann jeweils in weiteren Beistellgeräten im Zusammenwirken mit der Getränkebereitungsmaschine eingesetzt werden. Die Steuerung der Getränkebereitungsmaschine kann somit leitungsungebunden über den Zustand dieser Beistellgeräte informiert werden. Beispielsweise kann ein Abrechnungssystem implementiert werden (Münz-oder Jetons-Zähler, Schlüssel U-Key, Karten mit virtuellem Guthaben, Kreditkarten), indem der Getränkebereitungsmaschine der bezahlte Betrag gemeldet wird und diese daraufhin den Bezug einer Kaffeespezialität freischaltet oder sperrt. Die Funkeinrichtung kann ferner im Servicefall oder bei der Geräteproduktion eingesetzt werden, um einen elektronischen Speicher der Getränkebereitungsmaschine ein- oder auszulesen.

Die zuvor genannte Aufgabe wird ebenfalls durch ein Verfahren zum Beziehen eines Milchvolumens aus einem Milchkühler gemäss Anspruch 13 gelöst. Hierdurch wird gewährleistet, dass an der Getränkebereitungsmaschine stets Kaffeespezialitäten mit einem jeweils hierzu notwendigen Milchvolumen zubereitet und ausgegeben werden. Sollte erfasst werden, dass der Füllzustand des Milchbehälters im Milchkühler zu niedrig ist, um hieraus eine jeweils gewünschte Kaffeespezialität zubereiten zu können, wird ein Bezug von einer Milchabgabe aus dem Milchbehälter gar nicht erst gestartet. In diesem Fall kann beispielsweise weiterhin ein Kaffeeprodukt - jedoch ohne Milch zubereitet - bezogen werden.

Vorzugsweise enthält das Verfahren ferner den Schritt: Senden einer Information über die Temperatur des Milchvolumens im Milchbehälter an die Getränkebereitungsmaschine über die Luftschnittstelle. Eine Funkeinrichtung, welche zumindest einen Sender und/oder Empfänger umfasst, kann beispielsweise auch in weiteren Beistellgeräten im Zusammenwirken mit der Getränkebereitungsmaschine eingesetzt werden. Die Steuerung der Getränkebereitungsmaschine kann somit leitungsungebunden über den Zustand dieser Beistellgeräte informiert werden. Vorzugsweise enthält das Verfahren ferner den Schritt: Anzeigen einer Information über den Füllzustand des Milchbehälters und/oder über die Temperatur des Milchvolumens im Milchbehälter am Milchkühler und/oder an der Getränkebereitungsmaschine. Somit kann der Benutzer schnell und einfach über den Füllstand und/oder die Temperatur des Milchvolumens informiert werden.

Weitere Einzelheiten der Erfindung werden im Folgenden anhand der beigefügten Zeichnungen erläutert. Es zeigen:
- Figuren 1a-c: jeweils eine schematische Schnittansicht eines Milchkühlers in drei unterschiedlichen Ausführungsformen;
- Figuren 2a, b: jeweils eine Ansicht auf die Oberseite und Unterseite eines Deckels von dem Milchkühler gemäss einem ersten Beispiel;
- Figuren 3a, b: jeweils eine Ansicht auf die Oberseite und Unterseite eines Deckels von dem Milchkühler gemäss einem zweiten Beispiel;
- Figur 4: eine schematische Schnittansicht einer Getränkebereitungsmaschine;
- Figuren 5a-c: unterschiedliche Beispiele eines an die Getränkebereitungsmaschine einsteckbaren Sender/Empfängers;
- Figur 6: eine schematische Darstellung einer Kombination aus dem Milchkühler und der Getränkebereitungsmaschine; und
- Figur 7: ein Ablaufdiagramm eines Verfahrens gemäss einer Ausführungsform der vorliegenden Erfindung.

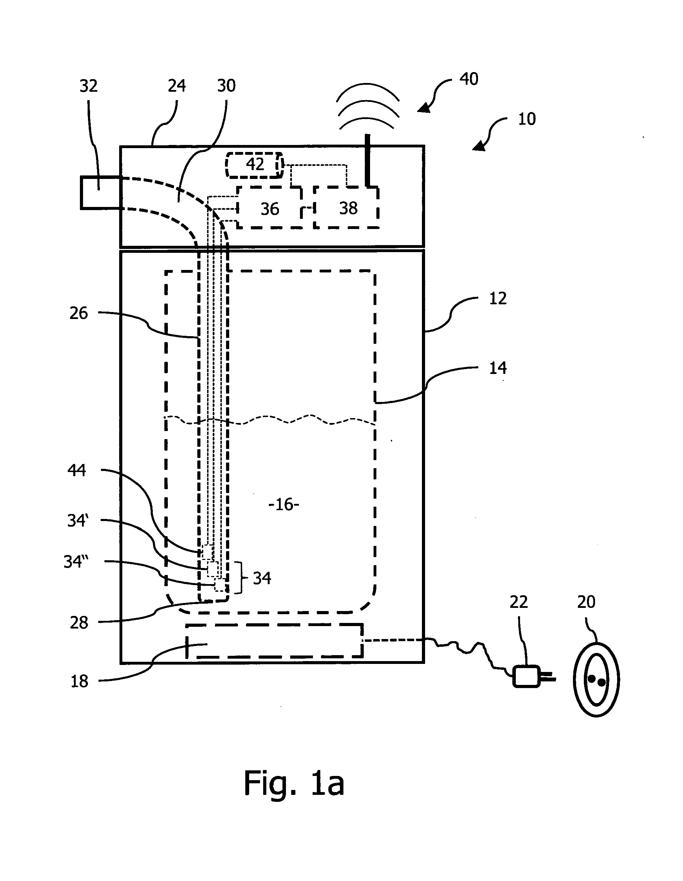

Figuren 1a bis c zeigen jeweils eine schematische Schnittansicht eines Milchkühlers in drei unterschiedlichen Ausführungsformen.

Figur 1a zeigt hierbei eine Schnittansicht eines erfindungsgemässen Milchkühlers 10 in einer ersten Ausführungsform. Der Milchkühler 10 ist zur gekühlten Bevorratung von Milch geeignet und kann über einen Milchschlauch (nicht gezeigt) mit einer Getränkebereitungsmaschine (nicht gezeigt) verbunden werden. Die Getränkebereitungsmaschine kann somit bei Bedarf gekühlte Milch aus dem Milchkühler 10 ansaugen. Der Milchkühler 10 enthält einen Milchbehälterkörper 12, welcher einen Milchbehälter 14 zur Aufnahme eines Milchvolumens 16 umfasst. Der Milchbehälter 14 kann entnehmbar in den Milchbehälterkörper 12 einsetzbar sein. Alternativ können der Milchbehälter 14 und der Milchbehälterkörper 12 einstückig ausgebildet sein. Der Milchkühler 10 enthält ferner eine Kühleinheit 18 zum Kühlen des Milchvolumens 16. Die Kühleinheit 18 kann beispielsweise ein Peltier-Element enthalten. Die Kühleinheit 18 wird über eine externe elektrische Energiequelle 20 (beispielsweise eine Steckdose mit einer 230 V/50 Hz Netzspannung) mit elektrischer Energie versorgt. Diese Netzspannung wird über ein Steckernetzteil 22 auf eine Gleichstrom-Niederspannung (z.B. 12 V oder 24 V) umgewandelt, welche der Kühleinheit 18 angelegt wird. Obwohl in der Figur nicht angezeigt, kann die 230 V/50 Hz Netzspannung der externen elektrischen Energiequelle 20 direkt einem Schaltnetzteil (nicht gezeigt) zugeführt werden, welches im Milchbehälterkörper 12 enthalten ist. Dieses Schaltnetzteil wandelt die Netzspannung in die Gleichstrom-Niederspannung zum Betreiben der Kühleinheit 18 um.

Der Milchkühler 10 enthält ferner einen Deckel 24 zum Verschliessen des Milchbehälters 14. Der Deckel 24 kann ferner den Milchbehälterkörper 12 verschliessen. Der Verschlussmechanismus zum Verschliessen des Deckels 24 kann ein Schraubverschluss, ein Schnappverschluss oder ein jeglicher weiterer Verschluss zum dichten Verschliessen und Öffnen des Deckels 24 mit dem Milchbehälter 14 sein. An der Unterseite des Deckels 24 ist eine Milchlanze 26 angeordnet, welche sich von der Unterseite des verschlossenen Deckels 24 aus im Wesentlichen senkrecht nach unten in das Milchvolumen 16 erstreckt. Die Milchlanze 26 ist dabei derart angeordnet und ausgebildet, dass sie sich im verschlossenen Zustand des Deckels 24 auf den Milchbehälter 14 im Wesentlichen vollständig innerhalb des Raumes des Milchbehälters 14 erstreckt. Das distale Ende von der Milchlanze 26 ist im verschlossenen Zustand des Deckels 24 nur gering vom Boden des Milchbehälters 14 beabstandet. Dieser Abstand kann beispielsweise 1 bis 5 mm betragen. Somit kann nahezu der gesamte Inhalt des Milchbehälters 14 entleert werden. An diesem distalen Ende der Milchlanze 26 ist eine Milchlanzenöffnung 28 angeordnet, welche in einen Kanal (nicht gezeigt) mündet, welcher im Inneren entlang der Milchlanze 26 verläuft. Dieser Kanal steht mit einer Durchleitung 30 im Inneren des Deckels 24 in Verbindung, welche in einem Milchauslass 32 an der Aussenseite des Deckels 24 mündet. Somit stehen die Milchlanzenöffnung 28 und der Milchauslass 32 in Fluidverbindung.

Die Milchlanze 26 umfasst ferner einen Füllzustands-Sensor 34, welcher an einem Umfangsbereich der Milchlanze 26 angebracht ist. Dieser Füllzustands-Sensor 34 kann ein Sensorsignal in Ansprechen auf einen Füllzustand des Milchbehälters 14 erzeugen. Der Füllzustands-Sensor 34 kann ein passives Messelement zum Messen eines elektrischen Widerstandes sein. Hierbei kann er zumindest zwei elektrisch leitfähige Sensorelemente 34', 34" enthalten, welche voneinander elektrisch getrennt an Oberflächenbereichen der Milchlanze 26 angebracht sind und jeweils separat mit einer elektrischen Leitung verbunden sind. Der Füllzustands-Sensor 34 ist mit einer im Deckel 24 angeordneten Füllzustands-Messelektronik 36 verbunden, die dazu ausgelegt ist, aus dem Sensorsignal des Füllzustands-Sensors 34 ein Füllzustandsinformationssignal zu erzeugen, welches eine Information über den Füllzustand des Milchbehälters 14 enthält. Diese Füllzustands-Messelektronik 36 ist elektrisch mit einem Sender 38 verbunden, der dieses Füllzustandsinformationssignal über eine Luftschnittstelle 40 an die Getränkebereitungsmaschine überträgt.

In diesem beschriebenen Beispiel der ersten Ausführungsform sind somit sowohl die Füllzustands-Messelektronik 36 als auch der Sender 38 in dem Deckel 24 enthalten. Diese elektronischen Bauelemente werden durch einen Energiespeicher 42 mit elektrischer Energie versorgt. Dieser Energiespeicher 42 kann eine oder mehrere Batterien oder einen oder mehrere wiederaufladbare Akkus enthalten. Dieser Energiespeicher 42 ist innerhalb des Deckels 24 in einer verschliessbaren Ausnehmung, welche von aussen zugänglich ist, entnehmbar untergebracht und elektrisch sowohl mit der Füllzustands-Messelektronik 36 als auch dem Sender 38 verbunden. Ein Vorteil von der in diesem Beispiel angezeigten Anordnung besteht darin, dass der Milchkühler 10 ohne jegliche Schnittstellen auskommt, da sämtliche elektronische Bauelemente (Füllzustands-Messelektronik 36 und Sender 38), einschliesslich ihrer Energieversorgung (Energiespeicher 42), im Deckel 24 untergebracht sind.

Der Milchkühler 10 enthält ferner einen Temperatursensor 44, welcher ebenfalls an einem Umfangsbereich der Milchlanze 26 angebracht ist. Hierdurch steht der Temperatursensor 44 (im verschlossenen Zustand des Deckels 24 auf dem Milchbehälter 14) mit dem Milchvolumen 16 in direkten Kontakt und kann somit auch rasche Temperaturschwankungen des Milchvolumens 16 zuverlässig erfassen. Der Temperatursensor 44 erzeugt ein Temperatursignal in Ansprechen auf die erfasste Temperatur des Milchvolumens 16. Der Temperatursensor 44 ist elektrisch mit der Füllzustands-Messelektronik 36 und/oder dem Sender 38 verbunden. Der Sender 38 überträgt das Temperatursignal über die Luftschnittstelle 40 an die Getränkebereitungsmaschine. Somit kann die Temperatur des Milchvolumens 16 an beispielsweise einer Anzeigevorrichtung der Getränkebereitungsmaschine angezeigt werden. Alternativ oder zusätzlich kann die Temperatur des Milchvolumens 16 an einer Anzeigevorrichtung direkt am Milchkühler 10 angezeigt werden.

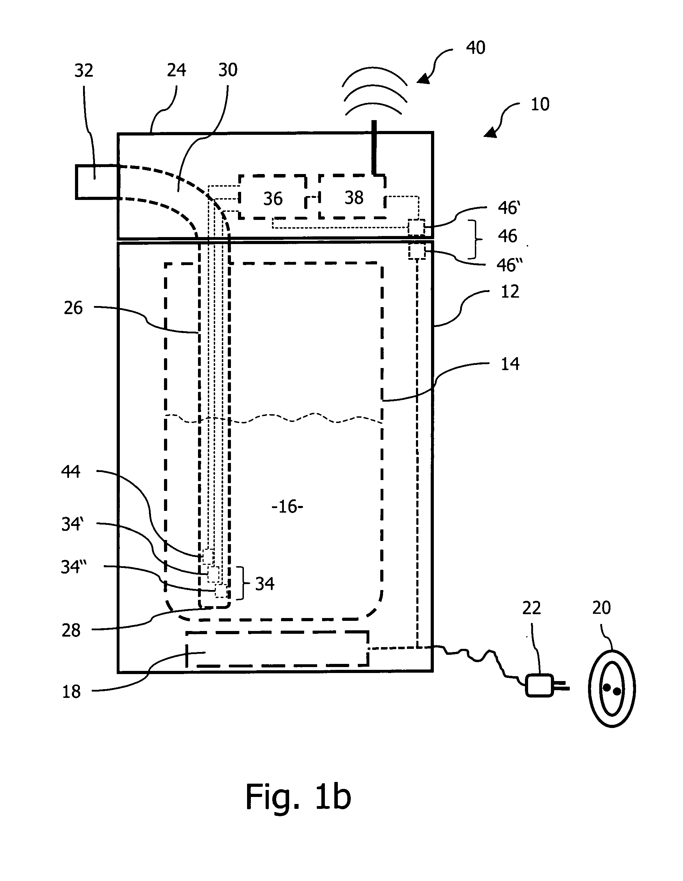

Figur 1b zeigt ein Beispiel des Milchkühlers 10 in einer zweiten Ausführungsform. Hierbei werden die Füllzustands-Messelektronik 36 und der Sender 38 über die an den Milchbehälterkörper 12 gekoppelte externe elektrische Energiequelle 20 mit elektrischer Energie versorgt. Die elektrische Verbindung hierzu wird über eine Energieversorgungs-Schnittstelle 46 zwischen dem Milchbehälterkörper 12 und dem Deckel 24 hergestellt. Diese Energieversorgungs-Schnittstelle 46 enthält beispielsweise zwei Schnittstellenelemente 46', 46", welche jeweils am Milchbehälterkörper 12 und Deckel 24 derart ausgerichtet und angeordnet sind, dass sie im verschlossenen Zustand des Deckels 24 auf dem Milchbehälterkörper 12 miteinander elektrisch verbunden sind. Somit kann der Deckel 24 weiterhin problemlos vom Milchbehälter 14 entnommen werden, um beispielsweise Milch aufzufüllen oder um den Deckel 24 und/oder den Milchbehälter 14 zu reinigen. Der Füllzustands-Sensor 34 verbleibt in diesem Beispiel weiterhin dauerhaft elektrisch mit der Füllzustands-Messelektronik 36 verbunden.

Ein Vorteil dieser Anordnung besteht darin, dass nunmehr kein Energiespeicher (vgl. Fig. 1a) notwendig ist. Hierdurch wird das Gewicht des Deckels 24 reduziert. Zudem müssen keine Batterien mehr ausgetauscht werden oder Akkus nachgeladen werden. Da die externe elektrische Energiequelle 20 ohnehin an den Milchbehälterkörper 12 gekoppelt ist, um beispielsweise die Kühleinheit 18 mit elektrischer Energie zu versorgen, müssen auch keine zusätzlichen Aufwendungen vorgenommen werden.

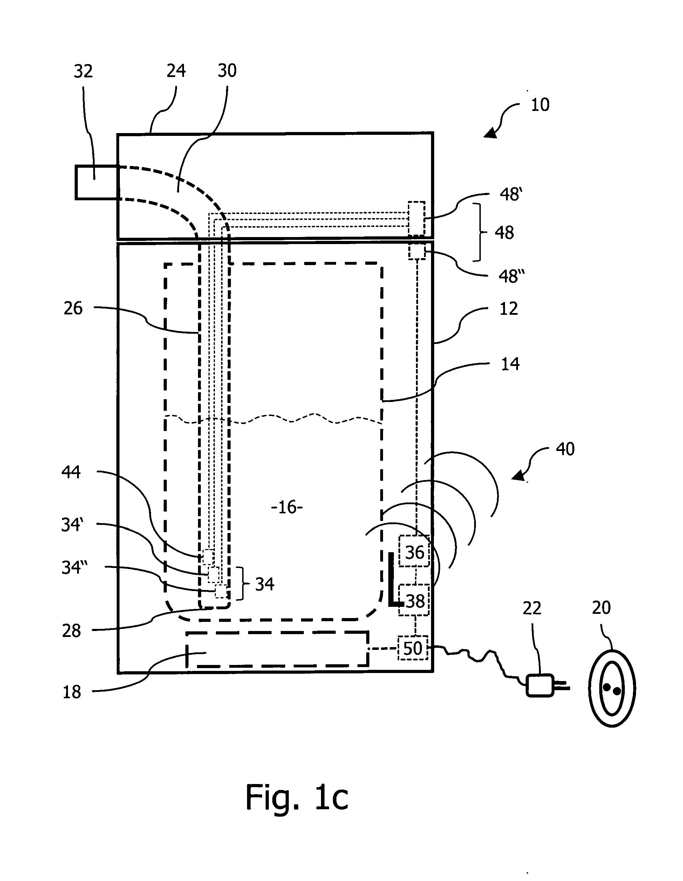

Figur 1c zeigt ein Beispiel des Milchkühlers 10 in einer dritten Ausführungsform. Hierbei sind die Füllzustands-Messelektronik 36 und der Sender 38 direkt im Milchbehälterkörper 12 untergebracht. Die Versorgung dieser elektronischen Bauelemente mit elektrischer Energie geschieht hierbei analog dem Beispiel aus der zweiten Ausführungsform, d.h. über die am Milchbehälterkörper 12 angekoppelte externe elektrische Energiequelle 20. Der Unterschied hierbei ist, dass die in dem Beispiel aus der zweiten Ausführungsform erwähnte Energieversorgungs-Schnittstelle zwischen dem Milchbehälterkörper 12 und dem Deckel 24 entfällt. Hierfür ist eine Sensor-Schnittstelle 48 zwischen dem Milchbehälterkörper 12 und dem Deckel 24 notwendig, über welche der Füllzustands-Sensor 34 elektrisch mit der Füllzustands-Messelektronik 36 koppelbar ist. Diese Sensor-Schnittstelle 48 enthält zwei Schnittstellenelemente 48', 48", welche jeweils am Milchbehälterkörper 12 und Deckel 24 derart ausgerichtet und angeordnet sind, dass sie im verschlossenen Zustand des Deckels 24 auf dem Milchbehälterkörper 12 miteinander elektrisch verbunden sind. Die elektronischen Bauelemente können über eine Energieversorgungs-Verteilerleiste 50 mit elektrischer Energie versorgt werden.

Ein weiterer Vorteil des Beispiels aus der dritten Ausführungsform gegenüber den Beispielen aus der ersten und zweiten Ausführungsform besteht darin, dass die elektronischen Bauelemente sehr viel einfacher innerhalb des Milchbehälterkörpers 12 als im Deckel 24 angeordnet und elektrisch verbunden werden können. Auch müssen am Deckel 24 nunmehr keinerlei Vorkehrungen getroffen werden, um elektronische Bauelemente gegen einen Eintritt von Feuchtigkeit (beispielsweise Wasser beim Reinigen oder verschüttete Milch) abzudichten. Somit kann der Deckel 24 sehr viel einfacher, kompakter und günstiger in der Herstellung aufgebaut werden. In diesem Fall kann beispielsweise das Füllzustandsinformationssignal und/oder Temperatursignal direkt über ein Kabel an die Getränkebereitungsmaschine übertragen werden.

Der Aufbau des Sensors 34 ist bei allen Beispielen aus der ersten bis dritten Ausführungsform identisch. Die zuvor genannten Sensorelemente 34', 34" des Füllzustands-Sensors 34 sind jeweils an derartigen Positionen an Oberflächenbereichen von der Milchlanze 26 angebracht, dass sie mit dem Milchvolumen 16 in Kontakt stehen (eingetaucht sind), solange das bevorratete Milchvolumen 16 grösser als ein notwendiges Milchvolumen zur Zubereitung einer gewünschten Kaffeespezialität ist. Ist das im Milchbehälter 14 bevorratete Milchvolumen 16 geringer als das notwendige Milchvolumen zur Zubereitung der gewünschten Kaffeespezialität, so steht zumindest eines der Sensorelemente 34', 34" nicht mehr mit dem Milchvolumen 16 in Kontakt. Hierdurch wird auch der elektrische Kontakt zwischen den Sensorelementen 34', 34" unterbrochen.

Es können selbstverständlich auch mehr als zwei Sensorelemente in Längsrichtung der Milchlanze 26 angeordnet werden, sodass diskrete Füllstandsniveaus erfasst werden können. Somit kann beispielsweise ein Überschreiten/Unterschreiten eines jeweiligen Füllstandsniveaus zur Zubereitung eines Latte Macchiatos, Cappuccinos, Milchkaffees oder einer weiteren Kaffeespezialität erfasst werden. Die jeweilige Zubereitung wird bei Unterschreiten eines jeweiligen Füllstandsniveaus nicht gestartet. Somit wird vermieden, dass eine mit unzureichender Menge von Milch zubereitete Kaffeespezialität bezogen wird.

Obwohl der Füllzustands-Sensor 34, bzw. die Sensorelemente 34', 34" in den Figuren 1a bis c an der Milchlanze 26 angebracht angezeigt sind, können diese auch an einer separaten Lanze angebracht sein.

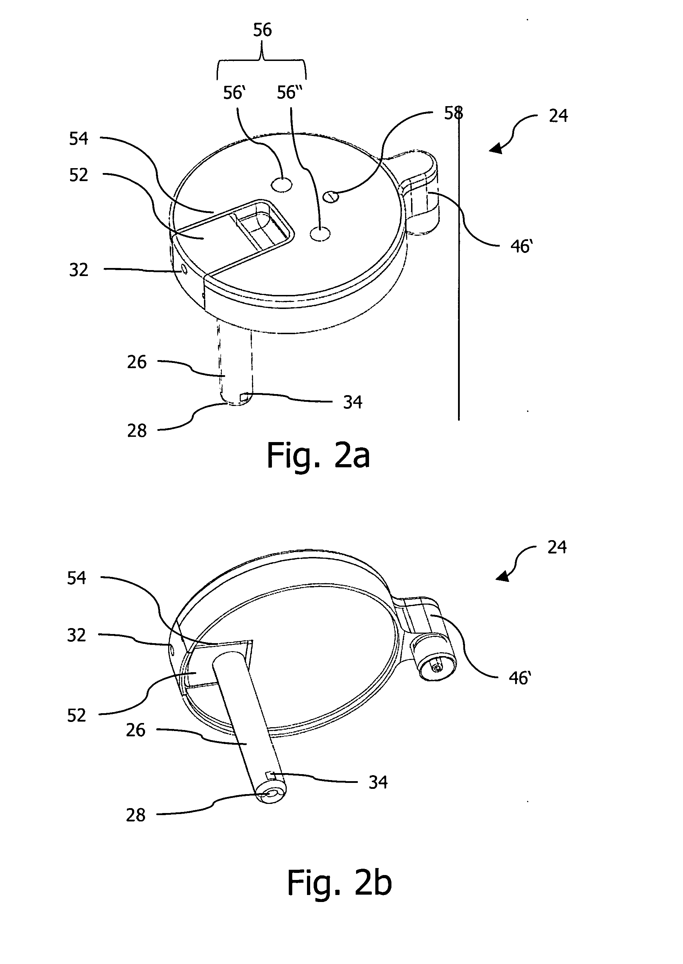

Figuren 2a und b zeigen jeweils ein erstes Beispiel des Deckels 24 in einer Draufsicht (Figur 2a) und einer Unteransicht (Figur 2b) in Perspektivdarstellung. Der Aufbau des Deckels 24 basiert auf dem Deckel des in Figur 1b angezeigten Milchkühlers in der zweiten Ausführungsform. Der Deckel 24 enthält die Milchlanze 26, welche an einem Kopplungsstück 52 angebracht ist, welches passgenau in eine Ausnehmung 54 am Deckel 24 entnehmbar einsteckbar ist. Im eingesteckten Zustand des Kopplungsstücks 52 in die Ausnehmung 54 ist der Umfang des Deckels 24 unterbrechungsfrei fortgesetzt. An der Umfangsseite des Kopplungsstücks 52 ist der Milchauslass 32 angeordnet, welcher mit der innerhalb des Kopplungsstücks 52 eingebrachten Durchleitung (Fig. 1a-c) in Fluidverbindung steht. Diese Durchleitung steht wiederum mit dem Kanal (nicht gezeigt) in Fluidverbindung, welcher innerhalb der Milchlanze 26 und in Längsrichtung hierzu verläuft und in die Milchlanzenöffnung 28 mündet. Somit stehen die Milchlanzenöffnung 28 und der Milchauslass 32 miteinander in Fluidverbindung. Da lediglich Bauteile des Deckels 24, welche mit Milch in Kontakt treten, regelmässig gereinigt und gespült werden müssen, reicht es aus, wenn das Kopplungsstück 52 über die Ausnehmung 54 vom Deckel 24 getrennt wird. Dieses Kopplungsstück 52 mitsamt der Milchlanze 26 kann dann einer gründlichen Reinigung mit Wasser oder einer weiteren Reinigungslösung unterzogen werden. Bei einem Spülen können auch insbesondere der Kanal und die Durchleitung zuverlässig gereinigt bzw. durchspült werden. Am distalen Ende der Milchlanze 26 ist der Füllzustands-Sensor 34 angebracht, welcher den Füllzustand des Milchbehälters (nicht gezeigt) erfasst.

Der Deckel 24 enthält in diesem Beispiel ferner die Füllzustands-Messelektronik und den Sender (beide nicht gezeigt), welche im Inneren des Deckels 24 untergebracht sind. Diese elektronischen Bauelemente können in einer Ausnehmung im Deckel 24 untergebracht sein oder gänzlich mit dem Material des Deckels 24 vergossen sein. An der Aussenoberfläche des Deckels 24 ist ein Anzeigenelement 56 angeordnet, welches eine optische Anzeige über den Füllzustand des Milchbehälters angibt. Das Anzeigenelement 56 enthält zwei LEDs 56', 56", welche durch ein jeweiliges Aufleuchten oder Erlöschen eine Information über den Füllzustand des Milchbehälters angeben.

An der für den Benutzer gut zugänglichen Aussenoberfläche des Deckels 24 ist eine Sender-Taste 58 bereitgestellt, welche elektrisch mit dem Sender verbunden ist. Bei einer Erstinbetriebnahme oder einem Gerätewechsel von dem Sender/Empfänger (der Getränkebereitungsmaschine) und/oder dem Sender (des Deckels 24) muss diese Taste 58 betätigt werden. Zeitgleich muss eine Taste (nicht gezeigt) an der Getränkebereitungsmaschine betätigt werden, sodass sich der Sender und der Sender/Empfänger durch Austausch eines Signalisierungsprotokolls gegenseitig erkennen und über die Luftschnittstelle koppeln.

An einem weiteren Umfangsabschnitt des Deckels 26 ist ein Schnittstellenelement 46' einer Energieversorgungs-Schnittstelle angebracht. Dieses Schnittstellenelement 46' ist zu einem weiteren Schnittstellenelement (nicht gezeigt) komplementär, welches am Milchbehälterkörper (nicht gezeigt) angeordnet ist. Beide Schnittstellenelemente sind derart ausgerichtet und angeordnet, dass sie im verschlossenen Zustand des Deckels 24 auf dem Milchbehälterkörper miteinander elektrisch verbunden sind. Das Schnittstellenelement 46' enthält in diesem Beispiel koaxial ausgerichtete Verbindungselemente (Koaxialstecker), welche zu komplementär ausgerichteten Verbindungselementen (Koaxialbuchse) am Milchbehälterkörper passen und über diese eine elektrische Verbindung herstellen, sobald der Deckel 24 aufgesetzt ist. Die somit aufgebaute elektrische Verbindung koppelt die externe elektrische Energiequelle (nicht gezeigt) mit der Füllzustands-Messelektronik und dem Sender, sodass diese mit elektrischer Energie versorgt sind.

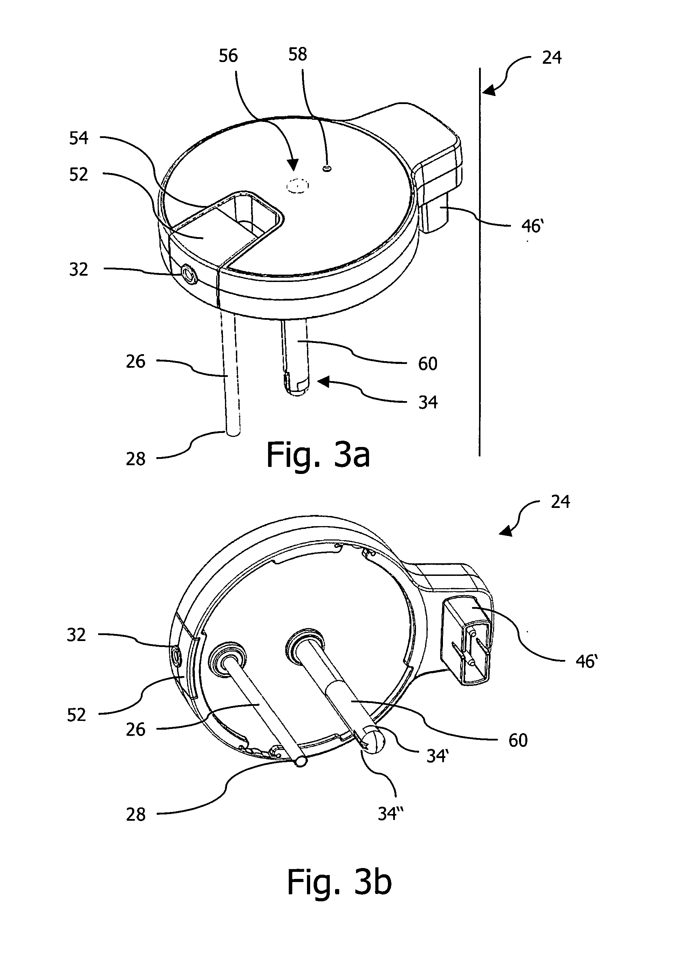

Figuren 3a und b zeigen jeweils ein zweites Beispiel des Deckels 24 in einer Draufsicht (Figur 3a) und einer Unteransicht (Figur 3b) in Perspektivdarstellung. Der dargestellte Deckel 24 unterscheidet sich von dem in Figuren 2a und b dargestellten Deckel in dem Punkt, dass zusätzlich eine Sensorlanze 60 enthalten ist. Diese Sensorlanze 60 ist derart an der Unterseite des Deckels 24 angebracht, dass auch sie im verschlossenen Zustand des Deckels 24 im Wesentlichen vollständig in den Milchbehälter 14 hineinragt. Die Milchlanze 26 und Sensorlanze 60 können zueinander parallel verlaufen. Der Füllzustands-Sensor 34 ist nunmehr nicht an der Milchlanze 26 sondern an der Sensorlanze 60 angebracht. Somit ist er dauerhaft elektrisch mit der im Deckel 24 enthaltenen Füllzustands-Messelektronik (nicht gezeigt) verbunden. Der Füllzustands-Sensor 34 enthält in diesem Beispiel zwei Sensorelemente 34', 34", welche am distalen Ende von der Sensorlanze 60 angebracht sind. Die Milchlanze 26 kann nunmehr weiterhin über das Kopplungsstück 52 vom Hauptkörper des Deckels 24 getrennt werden, um beispielsweise einer gründlichen Reinigung unterzogen zu werden, wobei keinerlei elektrische Schnittstelle zwischen dem Kopplungsstück 52 und dem Hauptkörper des Deckels 24 vorhanden sein muss. Hierdurch sind mögliche Fehlerquellen, beispielsweise hervorgerufen durch eine Verunreinigung durch Milchrückstände, ausgeschlossen. Das Schnittstellenelement 46' enthält in diesem Beispiel axial ausgerichtete Verbindungselemente (Axialstecker), welche zu komplementär ausgerichteten Verbindungselementen (Axialbuchse) am Milchbehälterkörper passen und über diese eine elektrische Verbindung herstellen, sobald der Deckel 24 aufgesetzt ist. Die somit aufgebaute elektrische Verbindung koppelt die externe elektrische Energiequelle (nicht gezeigt) mit der Füllzustands-Messelektronik und dem Sender, sodass diese mit elektrischer Energie versorgt sind.

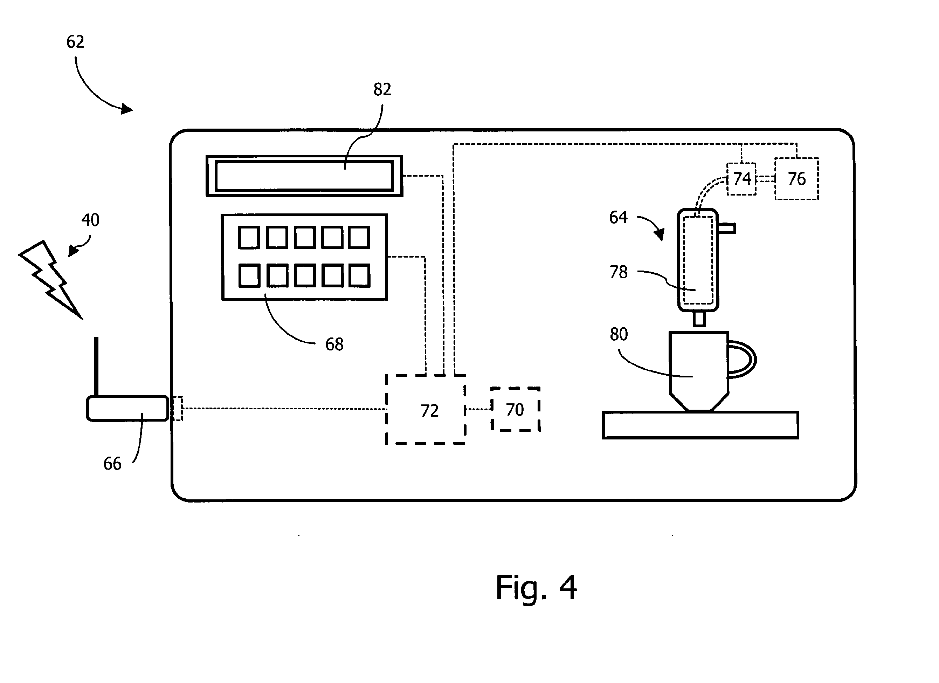

Figur 4 zeigt eine schematische Ansicht einer Getränkebereitungsmaschine 62. Die Getränkebereitungsmaschine 62 enthält eine Milchabgabevorrichtung 64 mit einem Milcheinlass, welcher mit einem Ende von einem Milchschlauch (nicht gezeigt) koppelbar ist. Dieser Milchschlauch steht an seinem weiteren Ende mit dem in Figuren 1 und 2 angezeigten Milchauslass des Deckels von dem Milchkühler in Fluidverbindung. Die Getränkebereitungsmaschine 62 enthält ferner einen Sender/Empfänger 66, welcher das vom Sender des Milchkühlers (beide nicht gezeigt) übertragene FüllzustandsInformationssignal empfängt, welches eine Information über den Füllzustand des Milchbehälters des Milchkühlers enthält.

Der Sender/Empfänger 66 kann optional ebenfalls ein Beistellgerät-Informationssignal von einem oder mehreren Beistellgeräten (nicht gezeigt) im Zusammenwirken mit der Getränkebereitungsmaschine 62 empfangen. Dieses Beistellgerät-Informationssignal wird hierbei über eine im Beistellgerät umfasste Funkeinrichtung übertragen. Somit kann die Getränkebereitungsmaschine 62 leitungsungebunden über den Zustand dieser Beistellgeräte informiert werden. Die Funkeinrichtung kann ferner im Servicefall oder bei der Geräteproduktion eingesetzt werden, um einen elektronischen Speicher der Getränkebereitungsmaschine 62 ein- oder auszulesen. In diesem Fall sind der Sender/Empfänger 66 der Getränkebereitungsmaschine 62 als auch die Funkeinrichtung des Beistellgeräts zur bi-direktionalen Kommunikation ausgelegt.

Der Sender/Empfänger 66 ist in eine entsprechende Schnittstelle an der Aussenseite der Getränkebereitungsmaschine 62 einsteckbar. Somit kann die Getränkebereitungsmaschine 62 schnell und einfach optional mit diesem Sender/Empfänger 66 erweitert werden. Alternativ kann der Sender/Empfänger 66 auf einer Schaltplatine einer Steuerung im Inneren der Getränkebereitungsmaschine 62 integriert sein. Der Empfang des Füllzustandsinformationssignals erfolgt über die Luftschnittstelle 40. Der Signalaustausch zwischen dem Sender des Milchkühlers und dem Sender/Empfänger 66 der Getränkebereitungsmaschine 62 kann über ein Trägersignal auf einer ISM-Band-Trägerfrequenz (2,4 GHz) oder einer anderen Träger-Hochfrequenz erfolgen.

Auf einer dem Benutzer zugewandten Aussenfläche der Getränkebereitungsmaschine 62 ist eine Benutzerschnittstelle 68 angeordnet, über welche manuell unterschiedliche Kaffeespezialitäten auswählbar sind. Diese Auswahl kann mittels Betätigung einer jeweiligen Taste erfolgen, welche einer bestimmten Kaffeespezialität zugewiesen ist. Über die Benutzerschnittstelle 68 können selbstverständlich auch weitere Eingaben erfolgen, wie beispielsweise die gewünschte Menge der ausgewählten Kaffeespezialität, Temperatur, Aroma, zusätzliche Zubereitungsoptionen, Angaben hinsichtlich der Zubereitung der Milch oder des Milchschaums, usw.

Es ist ferner eine Datenbank 70 vorgesehen, welche eine Information über ein notwendiges Milchvolumen zur Zubereitung einer jeweils an der Benutzerschnittstelle 68 auswählbaren Kaffeespezialität gespeichert hält. In diese Information fliesst auch die Angabe der jeweils gewünschten Menge ein.

Der Sender/Empfänger 66, die Benutzerschnittstelle 68 und die Datenbank 70 sind jeweils elektrisch mit einer Entscheidungslogik 72 verbunden. Nach der Eingabe der gewünschten Kaffeespezialität über die Benutzerschnittstelle 68 liest die Entscheidungslogik 72 in Ansprechen auf diese Eingabe eine Information über ein hierzu notwendiges Milchvolumen aus der Datenbank 70 aus. Ferner vergleicht die Entscheidungslogik 72 diese Information mit der über den Sender/Empfänger 66 empfangenen Information über den Füllzustand des Milchbehälters. Auf Basis dieses Vergleichs entscheidet die Entscheidungslogik 72, ob das im Milchbehälter enthaltene Milchvolumen grösser ist als das zur Zubereitung der jeweils ausgewählten Kaffeespezialität notwendige Milchvolumen oder nicht. Auf Basis dieser Entscheidung gibt die Entscheidungslogik 72 ein Freigabe-Signal oder ein Nicht-Freigabe-Signal zur Freigabe oder Nicht-Freigabe einer Milchabgabe aus der Milchabgabevorrichtung 64 aus.

Dieses Signal wird einem elektrisch ansteuerbaren Fluidventil 74 eingegeben, welches elektrisch mit dem Ausgang der Entscheidungslogik 72 verbunden ist. Das Fluidventil 74 kann beim Anlegen des Freigabe-Signals einen Fluiddurchgang zum Durchleiten eines Dampfbezuges durch die Milchabgabevorrichtung 64 öffnen. Liegt hingegen das Nicht-Freigabe-Signal an, so belässt das Fluidventil 74 diesen Fluiddurchgang geschlossen. Es können weitere Bauelemente mit dem Ausgang der Entscheidungslogik 72 verbunden sein, welche, sobald das Freigabe-Signal anliegt, Vorbereitungen zur Abgabe eines Dampf-/Milchbezuges treffen. Beispielsweise kann ein Thermoelement 76 zur Dampferzeugung angesteuert werden.

Die Milchabgabevorrichtung 64 enthält eine Kammer 78 zum Erzeugen eines Unterdrucks, sobald ein Dampfbezug durch diese Kammer 78 hindurch geleitet wird. Dieser Unterdruck wird auf Basis des Venturi-Prinzips erzeugt. Die Kammer 78 steht wiederum mit dem Milcheinlass in Fluidverbindung, sodass auch am Milcheinlass ein Unterdruck erzeugt wird, sobald ein Dampfbezug durch die Kammer 78 hindurch geleitet wird. Durch diesen Unterdruck wird wiederum ein Milchbezug aus dem Milchkühler angesaugt. Der angesaugte Milchbezug wird in der Kammer 78 mit dem Dampf vermischt und erwärmt und/oder aufgeschäumt. Hierzu kann ein in der Figur nicht angezeigter Lufteinlass bereitgestellt sein, über welchen Aussenluft in die Kammer 78 eingelassen wird. Die jeweils zubereitete Kaffeespezialität wird über einen Auslass der Milchabgabevorrichtung 64 in einen darunter platzierten Becher 80 abgegeben.

In diesem Beispiel wurde die Milchabgabevorrichtung 64 als eine Vorrichtung beschrieben, welche einen Milchbezug durch Zugabe von Dampf und/oder Luft zubereitet und hierbei Milch, erwärmte Milch und/oder aufgeschäumte Milch ausgibt. Zuvor kann ein jeweiliger Bezug von einem schwarzen Kaffee oder Espresso durch eine weitere, separate Abgabevorrichtung (nicht gezeigt) ausgegeben werden. Es sind auch Abgabevorrichtungen bekannt, welche sowohl einen schwarzen Kaffee oder Espresso als auch Milch, erwärmte Milch und/oder aufgeschäumte Milch abgeben.

Die Getränkebereitungsmaschine 62 kann ebenfalls ein vom Sender des Milchkühlers ausgesendetes Temperatursignal empfangen, welches eine Information über die Temperatur des Milchvolumens im Milchbehälter des Milchkühlers enthält. Diese Information kann an einer Anzeigevorrichtung 82 angezeigt werden, welche ebenfalls an der dem Benutzer zugewandten Aussenfläche der Getränkebereitungsmaschine 62 angebracht ist. Ferner kann an der Anzeigevorrichtung 82 eine Information über den Füllzustand des Milchbehälters angezeigt werden. Somit wird der Benutzer jederzeit und gut sichtbar über den Füllzustand des Milchbehälters und zugleich über die Temperatur des Milchvolumens informiert.

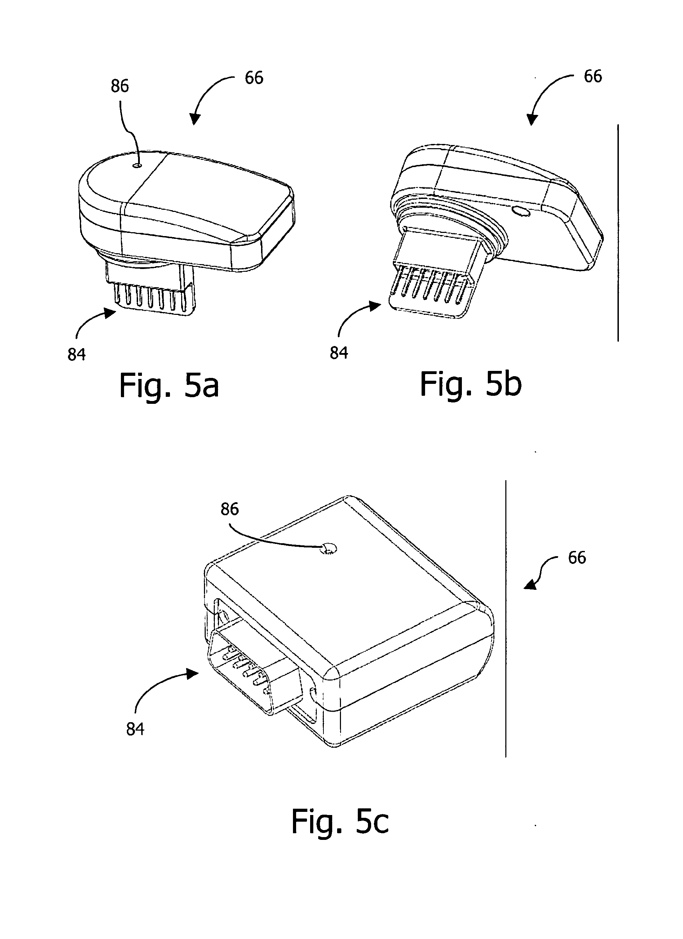

Figuren 5a, b zeigen den in Figur 4 schematisch angezeigten Sender/Empfänger 66 in zwei unterschiedlichen Perspektivansichten. Dieser Sender/Empfänger 66 enthält einen Stecker 84, welcher von aussen in eine komplementäre Buchse der Getränkebereitungsmaschine (beide nicht gezeigt) eingesteckt werden kann. Der angezeigte Stecker 84 ist ein Spezialstecker für eine proprietäre Schnittstelle, welche für jeweilige Anforderungen optimiert ist. An einer für den Benutzer gut zugänglichen Aussenfläche des Sender/Empfängers 66 ist eine Empfänger-Taste 86 bereitgestellt. Bei einer Erstinbetriebnahme oder einem Gerätewechsel von der Getränkebereitungsmaschine, dem Sender/Empfänger 66 oder dem Deckel des Milchkühlers muss diese Taste 86 am Sender/Empfänger 66 betätigt werden. Zeitgleich muss eine Taste auf der Oberseite des Deckels des Milchkühlers betätigt werden, sodass sich der Sender und der Sender/Empfänger 66 durch Austausch eines Signalisierungsprotokolls gegenseitig erkennen, zuordnen und koppeln können.

Figur 5c zeigt den Sender/Empfänger 66 in einer geänderten Ausgestaltung. Dieser Sender/Empfänger 66 hat einen Stecker 84 einer standardisierten Schnittstelle, beispielsweise ein D-Sub-Stecker, RS-232-Stecker, USB-Stecker, usw. Auf der Oberseite des Sender/Empfängers 66 ist ebenfalls die Empfänger-Taste 86 zur Auslösung des Signalisierungsprotokolls zur Zuordnung und Kopplung eines zu dem Sender/Empfänger 66 zugehörigen Senders angeordnet. Der Sender/Empfänger 66 ist - unabhängig von der Ausgestaltung - zum Senden und/oder Empfangen von einem Informationssignal ausgelegt.

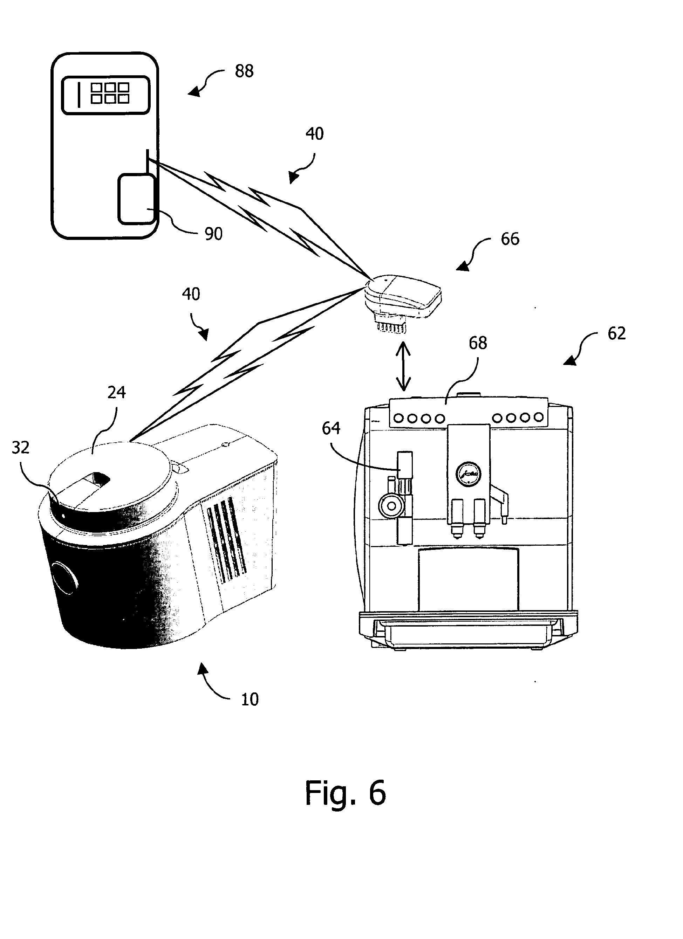

Figur 6 zeigt eine schematische Darstellung einer Kombination aus dem Milchkühler 10 und der Getränkebereitungsmaschine 62. Der Deckel 24 des Milchkühlers 10 enthält einen (nicht gezeigten) Sender, welcher über die Luftschnittstelle 40 mit dem Sender/Empfänger 66 kommuniziert, welcher wiederum elektrisch mit der Steuerelektronik (nicht gezeigt) der Getränkebereitungsmaschine 62 verbunden ist. Der Sender sendet eine Information über den Füllzustand des Milchbehälters (nicht gezeigt) des Milchkühlers 10 an den Sender/Empfänger 66. Auf Basis dieser Information entscheidet eine Entscheidungslogik (nicht gezeigt) innerhalb der Getränkebereitungsmaschine 62, ob das im Milchbehälter des Milchkühlers 10 enthaltene Milchvolumen zur Zubereitung einer jeweils an der Benutzerschnittstelle 68 ausgewählten Kaffeespezialität ausreicht. Falls das Milchvolumen nicht ausreicht, wird kein Milchbezug angefordert. Falls das Milchvolumen ausreicht, saugt die Milchabgabevorrichtung 64 an der Getränkebereitungsmaschine 62 über einen Milchschlauch (nicht gezeigt) zwischen der Milchabgabevorrichtung 64 und dem Milchauslass 32 am Deckel 24 das entsprechend benötigte Milchvolumen an. Die Milch wird dann in der Milchabgabevorrichtung 64 durch einen Dampfbezug entweder lediglich angesaugt, erwärmt und/oder aufgeschäumt.

Ferner kann die Kombination ein Beistellgerät 88 mit einer Funkeinrichtung 90 umfassen. Dieses Beistellgerät 88 kann im Zusammenwirken mit der Getränkebereitungsmaschine 62 eingesetzt werden. Die Getränkebereitungsmaschine 62 kann somit leitungsungebunden über den Zustand dieses Beistellgeräts 88 informiert werden. Beispielsweise kann das Beistellgerät 88 als ein Abrechnungssystem implementiert sein (Münz- oder Jetons-Zähler, Schlüssel U-Key, Karten mit virtuellem Guthaben, Kreditkarten), indem der Getränkebereitungsmaschine 62 der bezahlte Betrag gemeldet wird und diese daraufhin den Bezug einer Kaffeespezialität freischaltet oder sperrt. Die Funkeinrichtung 90 kann ferner im Servicefall oder bei der Geräteproduktion eingesetzt werden, um einen elektronischen Speicher der Getränkebereitungsmaschine 62 ein- oder auszulesen.

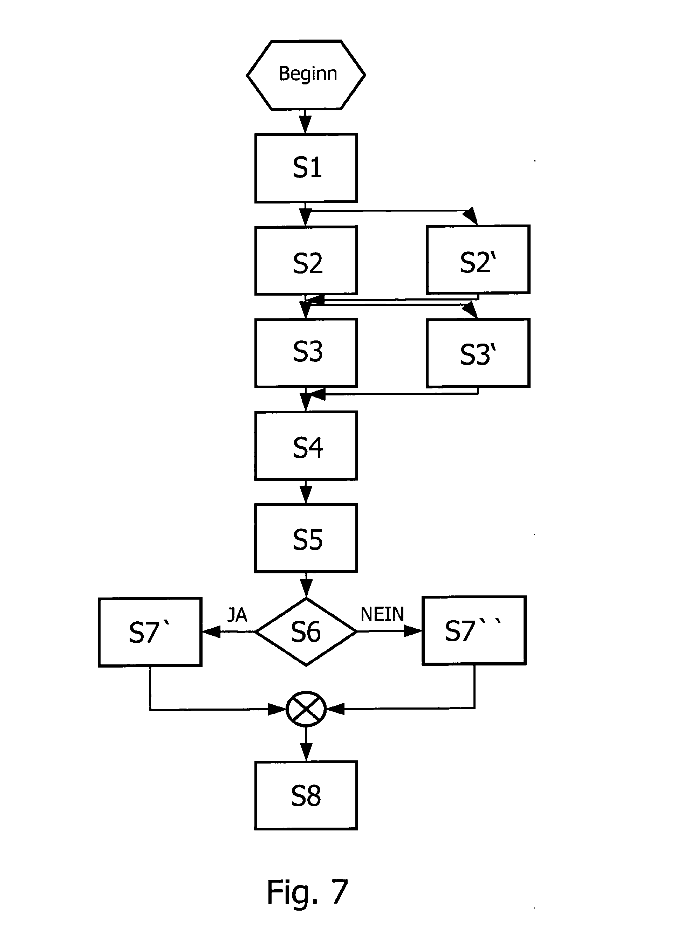

Figur 7 zeigt ein Ablaufdiagramm eines Verfahrens zum Beziehen eines Milchvolumens aus dem Milchkühler an die Milchabgabevorrichtung der Getränkebereitungsmaschine.

Der Beginn des Verfahrens wird durch die Auswahl einer jeweiligen Kaffeespezialität über die Benutzerschnittstelle an der Getränkebereitungsmaschine ausgelöst.

In einem Schritt S1 wird der Füllzustand des Milchbehälters des Milchkühlers erfasst.

In einem Schritt S2 wird die Information über den Füllzustand des Milchbehälters über die Luftschnittstelle an die Getränkebereitungsmaschine gesendet.

Diese Information wird in einem Schritt S3 an die Entscheidungslogik der Getränkebereitungsmaschine angelegt.

In einem Schritt S4 wird die Information über die Benutzerauswahl der jeweils ausgewählten Kaffeespezialität, welche zuvor über die Benutzerschnittstelle der Getränkebereitungsmaschine eingegeben ist, an die Entscheidungslogik übertragen.

In einem Schritt S5 wird eine Information aus der Datenbank über ein jeweils notwendiges Milchvolumen zur Zubereitung der jeweils ausgewählten Kaffeespezialität ausgelesen.

In einem Schritt S6 wird die Information über das notwendige Milchvolumen mit der Information über den Füllzustand des Milchbehälters verglichen. Wenn auf Basis des Vergleichs in Schritt S6 entschieden ist, dass der Füllzustand des Milchbehälters grösser als das notwendige Milchvolumen ist (JA), wird in einem Schritt S7" ein Freigabe-Signal ausgegeben. Wenn in Schritt S6 entschieden ist, dass der Füllzustand des Milchbehälters geringer als das notwendige Milchvolumen ist (NEIN), wird in einem Schritt S7" ein Nicht-Freigabe-Signal ausgegeben.

In einem Schritt S8 wird das Freigabe-Signal oder Nicht-Freigabe-Signal an das elektrische Fluidventil der Milchabgabevorrichtung der Getränkebereitungsmaschine angelegt.

Der Schritt S2 kann einen Schritt S2' umfassen, welcher das Senden einer Information über die Temperatur des Milchvolumens im Milchbehälter über die Luftschnittstelle an die Getränkebereitungsmaschine enthält.

Der Schritt S3 kann einen Schritt S3' umfassen, welcher ein Anzeigen der Information über den Füllzustand des Milchbehälters und/oder über die Temperatur des Milchvolumens im Milchbehälter am Milchkühler und/oder an der Getränkebereitungsmaschine enthält.

## Patentansprüche

1. Milchkühler (10) zur gekühlten Bevorratung eines Milchvolumens (16), welcher enthält:
einen Milchbehälterkörper (12) mit einem Milchbehälter (14) zur Aufnahme des Milchvolumens (16),
eine Kühleinheit (18) zum Kühlen des Milchvolumens (16),
eine Milchlanze (26), welche ein erstes Ende, welches in das Milchvolumen (16) eintauchbar ist, und ein zweites Ende enthält, welches mit einem Milchauslass (32) an der Aussenseite des Milchkühlers (10) in Fluidverbindung steht,
einen Füllzustands-Sensor (34), welcher dazu ausgelegt ist, ein Sensorsignal in Ansprechen auf einen Füllzustand des Milchbehälters (14) zu erzeugen,
eine Füllzustands-Messelektronik (36), welche mit dem Füllzustands-Sensor (34) verbunden ist und dazu ausgelegt ist, aus dem Sensorsignal ein Füllzustandsinformationssignal zu erzeugen, welches eine Information über den Füllzustand des Milchbehälters (14) enthält, und
einen Sender (38) zum Übertragen des Füllzustandsinformationssignals über eine Luftschnittstelle (40) an eine Getränkebereitungsmaschine (62).

2. Milchkühler (10) nach Anspruch 1, wobei die Füllzustands-Messelektronik (36) und/oder der Sender (38) in dem Deckel (24) enthalten sind.

3. Milchkühler (10) nach Anspruch 1 oder 2, wobei der Füllzustands-Sensor (34) an einer Sensorlanze (60) angebracht ist, welche derart an der Unterseite des Deckels (24) befestigt ist, dass sie im verschlossenen Zustand des Deckels (24) im Wesentlichen vollständig in den Milchbehälter (14) hineinragt.

4. Milchkühler (10) nach einem der vorhergehenden Ansprüche, wobei die Füllzustands-Messelektronik (36) und/oder der Sender (38) über zumindest einen Energiespeicher (42), insbesondere eine Batterie oder ein Akkumulator, mit elektrischer Energie versorgbar sind.

5. Milchkühler (10) nach Anspruch 2 oder 3, wobei die Füllzustands-Messelektronik (36) und/oder der Sender (38) über eine am Milchbehälterkörper (12) koppelbare externe elektrische Energiequelle (20) mit elektrischer Energie versorgbar sind.

6. Milchkühler (10) nach Anspruch 5, wobei die externe elektrische Energiequelle (20) über eine Energieversorgungs-Schnittstelle (46) zwischen dem Milchbehälterkörper (12) und dem Deckel (24) elektrisch mit der Füllzustands-Messelektronik (36) und/oder dem Sender (38) koppelbar ist.

7. Milchkühler (10) nach Anspruch 6, wobei die Energieversorgungs-Schnittstelle (46) wenigstens zwei Schnittstellenelemente (46', 46") enthält, welche jeweils am Milchbehälterkörper (12) und Deckel (24) derart ausgerichtet und angeordnet sind, dass sie im verschlossenen Zustand des Deckels (24) auf den Milchbehälterkörper (12) miteinander elektrisch verbunden sind.

8. Milchkühler (10) nach Anspruch 1, wobei die Füllzustands-Messelektronik (36) und/oder der Sender (38) im Milchbehälterkörper (12) enthalten sind.

9. Milchkühler (10) nach Anspruch 8, wobei die Füllzustands-Messelektronik (36) und/oder der Sender (38) dauerhaft über eine am Milchbehälterkörper (12) koppelbare externe elektrische Energiequelle (20) mit elektrischer Energie versorgbar sind.

10. Getränkebereitungsmaschine (62), welche enthält:
eine Milchabgabevorrichtung (64) mit einem Milcheinlass, welcher mit einem Ende von einem Milchschlauch koppelbar ist, welcher an seinem anderen Ende mit einem Milchauslass (32) an einem Milchkühler (10) in Fluidverbindung steht,
einen Sender/Empfänger (66), welcher dazu ausgelegt ist, ein Füllzustandsinformationssignal zu empfangen,
welches eine Information über einen Füllzustand eines Milchbehälters (14) des Milchkühlers (10) enthält,
eine Benutzerschnittstelle (68), über welche manuell unterschiedliche Kaffeespezialitäten auswählbar sind,
eine Datenbank (70), welche eine Information über ein notwendiges Milchvolumen zur Zubereitung einer jeweils an der Benutzerschnittstelle (68) auswählbaren Kaffeespezialität gespeichert hält,
eine Entscheidungslogik (72) mit Eingängen, welche jeweils mit dem Sender/Empfänger (66), der Benutzerschnittstelle (68) und der Datenbank (70) verbunden sind, wobei die Entscheidungslogik (72) dazu ausgelegt ist, in Ansprechen auf eine Eingabe an der Benutzerschnittstelle (68) eine Information über ein hierzu notwendiges Milchvolumen aus der Datenbank (70) auszulesen, diese Information mit der empfangenen Information über den Füllzustand des Milchbehälters (14) zu vergleichen, und auf Basis des Vergleichs, wenn entschieden ist, dass das im Milchbehälter (14) enthaltene Milchvolumen (16) grösser als das zur Zubereitung einer jeweils ausgewählten Kaffeespezialität notwendige Milchvolumen ist, ein Freigabe-Signal oder ein Nicht-Freigabe-Signal zur Freigabe oder Nicht-Freigabe einer Milchabgabe aus der Milchabgabevorrichtung (64) auszugeben.

11. Kombination aus einem Milchkühler (10) nach einem der Ansprüche 1 bis 9 und einer Getränkebereitungsmaschine (62) nach Anspruch 10.

12. Kombination nach Anspruch 11, ferner mit zumindest einem Beistellgerät (88) mit einer Funkeinrichtung (90) zum Übertragen von einem Beistellgerät-Informationssignal an die Getränkebereitungsmaschine (62) und/oder Empfangen von einem Getränkebereitungsmaschine-Informationssignal von der Getränkebereitungsmaschine (62) über jeweils eine Luftschnittstelle (40).

13. Verfahren zum Beziehen eines Milchvolumens (16) aus einem Milchkühler (10) nach einem der Ansprüche 1 bis 9 an einer Milchabgabevorrichtung (64) einer Getränkebereitungsmaschine (62) nach Anspruch 10, mit den Schritten:
Erfassen (S1) eines Füllzustandes eines Milchbehälters (14) des Milchkühlers (10),
Senden (S2) einer Information über den Füllzustand des Milchbehälters (14) an die Getränkebereitungsmaschine (62) über eine Luftschnittstelle (40),
Anlegen (S3) dieser Information an eine Entscheidungslogik (72),
Übertragen (S4) von einer Information über eine Benutzerauswahl über eine jeweils ausgewählte Kaffeespezialität, wobei die Benutzerauswahl über eine Benutzerschnittstelle (68) der Getränkebereitungsmaschine (62) eingegeben ist, an die Entscheidungslogik (72),
Auslesen (S5) einer Information aus einer Datenbank (70) über ein jeweils notwendiges Milchvolumen zur Zubereitung einer jeweils ausgewählten Kaffeespezialität,
Vergleichen (S6) der Information über das notwendige Milchvolumen mit der Information über den. Füllzustand des Milchbehälters (14),
Erzeugen (S7', S7") eines Freigabe-Signals oder eines Nicht-Freigabe-Signals zur Freigabe oder Nicht-Freigabe einer Milchabgabe, wenn auf Basis des Vergleichs entschieden ist, dass der Füllzustand des Milchbehälters (14) grösser als das notwendige Milchvolumen ist, und
Anlegen (S8) des Freigabe-Signals oder des Nicht-Freigabe-Signals an ein elektrisches Fluidventil (74) einer Milchabgabevorrichtung (64) der Getränkebereitungsmaschine (62).

14. Verfahren nach Anspruch 13, welches ferner den Schritt enthält:
Senden einer Information über die Temperatur des Milchvolumens (16) im Milchbehälter (14) an die Getränkebereitungsmaschine (62) über die Luftschnittstelle (40).

15. Verfahren nach Anspruch 13 oder 14, welches ferner den Schritt enthält:
Anzeigen einer Information über den Füllzustand des Milchbehälters (14) und/oder über die Temperatur des Milchvolumens (16) im Milchbehälter (14) am Milchkühler (10) und/oder an der Getränkebereitungsmaschine (62).
